(19)

Europäisches
Patentamt
European
Patent Office
Office européen
des brevets

(11) **EP 2 233 322 B1**

(12) **EUROPEAN PATENT SPECIFICATION**

(45) Date of publication and mention
of the grant of the patent:
**08.08.2012 Bulletin 2012/32**

(51) Int Cl.:
**B60C 13/00** *(2006.01)*    **B60C 15/00** *(2006.01)*

(21) Application number: **08867785.1**

(22) Date of filing: **26.12.2008**

(86) International application number:
**PCT/JP2008/073739**

(87) International publication number:
**WO 2009/084634 (09.07.2009 Gazette 2009/28)**

(54) **PNEUMATIC TIRE**

LUFTREIFEN

PNEU

(84) Designated Contracting States:
**AT BE BG CH CY CZ DE DK EE ES FI FR GB GR
HR HU IE IS IT LI LT LU LV MC MT NL NO PL PT
RO SE SI SK TR**

(30) Priority: **28.12.2007   JP 2007340626
28.12.2007   JP 2007340667
28.12.2007   JP 2007340700**

(43) Date of publication of application:
**29.09.2010   Bulletin 2010/39**

(73) Proprietor: **Bridgestone Corporation
Tokyo 104-8340 (JP)**

(72) Inventors:
• **INOUE, Takumi
Tokyo (JP)**

• **KUROISHI, Kazuya
Tokyo (JP)**
• **ARAKI, Kenji
Tokyo (JP)**

(74) Representative: **Oxley, Robin John George
Marks & Clerk LLP
90 Long Acre
London
WC2E 9RA (GB)**

(56) References cited:
**WO-A1-2006/130944     WO-A1-2007/032405
JP-A- 2009 029 378**

Note: Within nine months of the publication of the mention of the grant of the European patent in the European Patent
Bulletin, any person may give notice to the European Patent Office of opposition to that patent, in accordance with the
Implementing Regulations. Notice of opposition shall not be deemed to have been filed until the opposition fee has been
paid. (Art. 99(1) European Patent Convention).

## Description

## Technical Field

The present invention relates a pneumatic tire which is provided with a turbulent flow generation projection for generating a turbulent flow at least in a portion of a surface of the tire and has an outer diameter of not less than 2 m.

Background art

In general, a rise of the tire temperature of a pneumatic tire is considered to be unfavorable from the viewpoint of durability because such rise may accelerate change over time such as deterioration of the material properties of the tire, or may cause breakage of its tread portion at the time of high speed traveling. Especially, for off-the-road radial tire (ORR) and truck/bus radial tire (TBR) for use under heavy load, and run-flat tire at the time of driving with a puncture (with 0 kPa internal pressure), reduction of the tire temperature in order to improve the durability of the tire has been a great challenge.

For example, a pneumatic tire with the following configuration has been disclosed: the tire thickness is increased outward in the tread width direction in a neighborhood of a position where a bead portion is in contact with a rim flange, and the thickened reinforced portion is formed to have such a shape as to cover the rim flange (so-called rim guard) (Japanese Patent Laid-Open No. 2006-76431). According to this configuration, the tire temperature can be reduced by suppressing deformation of the tire surface (especially bead portion) of the sidewall portion.

The conventional pneumatic tire described above, however, has the thick bead portion and the temperature thereof will be increased due to its thickness. Thus, deformation of the bead portion due to load to the tire may break the reinforced portion, and the neighborhood of the bead portion may be damaged by development of cracking caused by this breakage.

Especially, the heavy-dury tire has significant deformation when a heavy load is applied to the tire, thus, providing such reinforced portion creates concerns about the above problem. With this heavy-duty tire, even if the bead portion is not provided with the reinforced portion, the bead portion is originally formed with a greater thickness than that of the tire surface of other sidewall portions, thus the temperature of the bead portion is increased, and not only the durability of the bead portion but also the durability of the tire is reduced.

Thus, it is an object of the present invention to provide a pneumatic tire capable of reducing the tire temperature, particularly the temperature in the neighborhood of the bead portion to increase the durability of the tire.

Attention is drawn to the disclosures of WO2007/032405 and WO 2006/130944.

## Disclosure of the Invention

Based on the background described above, the inventors of the present application analyzed how to reduce the tire temperature efficiently. As a result, it has been found that a rise of the temperature in the neighborhood of the bead portion is suppressed and the heat dissipation rate of the tire temperature is improved by accelerating the speed of the wind generated from the front of the vehicle (traveling wind) as the vehicle travels as well as the speed of the rotational wind generated from the forward in the tire rotation direction as the pneumatic tire is rotated.

Thus, the present invention has the following features. The first feature of the present invention is summarized in that a pneumatic tire (i.e., a pneumatic tire 1) which is provided with a turbulent flow generation projection (i.e., a turbulent flow generation projection 11)for generating a turbulent flow at least in a portion of a surface of the tire (a surface of the tire 9) and has an outer diameter of not less than 2 m, wherein the turbulent flow generation projection extends linearly or curvilinearly along the tire radial direction; and a relationship of $h = \sqrt{1/(V/R)} \times$ coefficient $\kappa$ is satisfied where "h" is a projection height (mm) from the surface of the tire to a most protruded position of the turbulent flow generation projection, "V" is a speed of a vehicle (km/h), "R" is a tire outer diameter (m), provided that coefficient $\kappa$ = 27.0 to 29.5.

According to such feature, by making the projection height h satisfy the above-mentioned equation, the traveling wind generated from the front of the vehicle as the vehicle travels and the rotational wind generated from the forward in the tire rotation direction as the pneumatic tire is rotated have an increased pressure on the front side of the turbulent flow generation projection when flowing over the turbulent flow generation projection. According to this configuration, as the pressure is increased, the flows of the traveling wind and the rotational wind that flow over the turbulent flow generation projection can be accelerated (i.e., the heat dissipation rate of the tire temperature can be increased). By the accelerated traveling wind and rotational wind, the tire temperature, particularly the temperature in the neighborhood of the bead portion can be reduced, thus the durability of the tire can be increased.

The second feature of the present invention dependent from the first feature of the present invention and summarized in that an inclined angle (θ) which is an angle at which the turbulent flow generation projection is inclined with respect to the tire radial direction satisfies a range of -70° ≤ θ ≤ 70°.

The third feature of the present invention dependent from the first feature of the present invention and summarized in that in a cross section in a tread width direction, a projection-to-rim distance (d) from a projection innermost position (P1) to a rim outermost position (P2) is set not less than 30 mm, the projection innermost position being an innermost position of the turbulent flow generation projection in the tire radial direction, the rim outermost position being an outermost position of a rim flange in the tire radial direction.

The fourth feature of the present invention dependent from the first feature of the present invention and summarized in that an outer lateral end distance (D) from a projection outermost position (P3) to the tread outermost position is not less than 10% of the tire height (SH), the projection outermost position being an outermost position of the turbulent flow generation projection in the tire radial direction.

The projection-to-rim distance (d) and the outer lateral end distance (D) are assumed to be the values measured with the tire mounted on a normal rim under normal internal pressure (may also be loaded with a normal load). The "normal rim" is a rim specified for each tire in the standard system including the standard on which the tires are based. For example, the normal rim means Standard Rim for JATMA standard, "Design Rim" for TRA standard, and "Measuring Rim" for ETRTO standard. Also, the above-mentioned "normal pressure" is the air pressure specified for each tire by the above-mentioned standard, and means the highest air pressure for JATMA, the maximum pressure value listed in the table "TIRE LOAD LIMITS AT VARIOUS COLD INFLATION PRESSURES" for TRA, and "INFLATION PRESSURE" for ETRTO. Further, the above-mentioned "normal load" is the load specified for each tire by the above-mentioned standard, and means the highest load capacity for JATMA, the maximum load value listed in the table "TIRE LOAD LIMITS AT VARIOUS COLD INFLATION PRESSURES" for TRA, and "LOAD CAPACITY" for ETRTO.

The fifth feature of the present invention dependent from the first feature of the present invention and summarized in that a projection width (w) which is a width of the turbulent flow generation projection in a direction approximately perpendicular to an extending direction of the turbulent flow generation projection is from 2 to 10 mm.

The sixth feature of the present invention dependent from the first feature of the present invention and summarized in that a relationship of $1.0 \leq h/w \leq 10$ is satisfied, where "h" is the projection height from the surface of the tire to the most protruded position of the turbulent flow generation projection, and "w" is the projection width.

The seventh feature of the present invention dependent from the first feature of the present invention and summarized in that relationships of $1.0 \leq p/h \leq 20.0$ and $1.0 \leq (p-w)/w \leq 100.0$ are satisfied, where "h" is the projection height from the surface of the tire to the most protruded position of the turbulent flow generation projection, "p" is a pitch between each adjacent two of the turbulent flow generation projections, and "w" is the projection width.

**Advantages of the Invention**

According to the present invention, it is possible to provide a pneumatic tire capable of reducing the tire temperature, particularly in the neighborhood of the bead portion to increase the durability of the tire.

**Brief Description of the Drawings**

[FIG. 1] FIG. 1 is a side view showing a pneumatic tire 1 according to First Embodiment.
[FIG. 2] FIG. 2 is a partial sectional perspective view showing the pneumatic tire 1 according to First Embodiment.
[FIG. 3] FIG. 3 is a cross-sectional view in a tread width direction showing the pneumatic tire 1 according to First Embodiment.
[FIG.4] FIG. 4 is a top view showing a turbulent flow generation projection 11 according to First Embodiment.
[FIG. 5] FIG. 5 is a cross-sectional view approximately perpendicular to the extending direction of a turbulent flow generation projection 11 according to First Embodiment.
[FIG. 6] FIG. 6 is a cross-sectional view approximately perpendicular to the extending direction of a turbulent flow generation projection 11A according to Modification 1.
[FIG. 7] FIG. 7 is a cross-sectional view approximately perpendicular to the extending direction of a turbulent flow generation projection 11B according to Modification 2.
[FIG. 8] FIG. 8 is a cross-sectional view approximately perpendicular to the extending direction of a turbulent flow generation projection 11C according to Modification 3.
[FIG. 9] FIG. 9 is a cross-sectional view approximately perpendicular to the extending direction of a turbulent flow generation projection 11D according to Modification 4.
[FIG. 10] FIG. 10 is a graph showing a heat transfer rate of a pneumatic tire in comparative evaluation (first).
[FIG. 11] FIG. 11 is a graph showing a heat transfer rate of a pneumatic tire in comparative evaluation (second).
[FIG. 12] FIG. 12 is a graph showing a heat transfer rate of a pneumatic tire in comparative evaluation (third).

[FIG. 13] FIG. 13 is a side view showing a pneumatic tire 100 according to Second Embodiment.

[FIG. 14] FIG. 14 is a partial sectional perspective view showing the pneumatic tire 100 according to Second Embodiment.

[FIG. 15] FIG. 15 is a cross-sectional view in a tread width direction showing the pneumatic tire 100 according to Second Embodiment.

[FIG. 16] FIG. 16 is a cross-sectional perspective view showing a turbulent flow generation projection 111 according to Second Embodiment.

[FIG. 17] FIG. 17 is a radial side view showing a turbulent flow generation projection 111 according to Second Embodiment.

[FIG. 18] FIG. 18 is a top view showing a turbulent flow generation projection 111 according to Second Embodiment.

[FIG. 19] FIG. 19 is a cross-sectional perspective view showing a turbulent flow generation projection 111A according to Modification 1.

[FIG. 20] FIG. 20 is a cross-sectional perspective view showing a turbulent flow generation projection 111B according to Modification 2.

[FIG. 21] FIG. 21 is a cross-sectional perspective view showing a turbulent flow generation projection 111C according to Modification 3.

[FIG. 22] FIG. 22 is a cross-sectional perspective view showing a turbulent flow generation projection 111D according to Modification 4.

[FIG. 23] FIG. 23 is a cross-sectional perspective view showing a turbulent flow generation projection 111E according to Modification 5.

[FIG. 24] FIG. 24 is a partial sectional perspective view showing a pneumatic tire 200 according to Third Embodiment.

[FIG. 25] FIG. 25 is a cross-sectional view in a tread width direction showing the pneumatic tire 200 according to Third Embodiment.

[FIG. 26] FIG. 26 is a partial side view (along the arrow A in FIG. 25) showing the pneumatic tire 200 according to Third Embodiment.

[FIG. 27] FIG. 27 is a perspective view showing a turbulent flow generation projection 211 according to Third Embodiment.

[FIG. 28] FIG. 28 is a cross-sectional view showing a turbulent flow generation projection 211 according to Third Embodiment.

[FIG. 29] FIG. 29 is a partial sectional perspective view showing the pneumatic tire 200A according to Modification 1.

[FIG. 30] FIG. 30 is a partial side view showing the pneumatic tire 200A according to Modification.

[FIG. 31] FIG. 31 is a partial sectional perspective view showing the pneumatic tire 200B according to Modification 2.

[FIG. 32] FIG. 32 is a partial side view showing the pneumatic tire 200B according to Modification 2.

## Best Mode for Carrying Out the Invention

Now, an example of a pneumatic tire according to the present invention is described with reference to the drawings. Specifically, the following are described: (1) the configuration of the pneumatic tire, (2) the configuration of the turbulent flow generation projection, (3) modifications of the turbulent flow generation projection, (4) comparative evaluation, (5) operations and effects, and (6) other embodiments.

In the following description of the drawings, identical or similar reference numerals are assigned to identical or similar components. However, the drawings are schematic and it should be noted that the dimensions are different from actual ones. Accordingly, specific dimensions should be recognized in consideration of the following description. Also, there are included some portions of the drawings between which a dimensional relationship and/or dimensional proportions are inconsistent.

(1) The configuration of the pneumatic tire

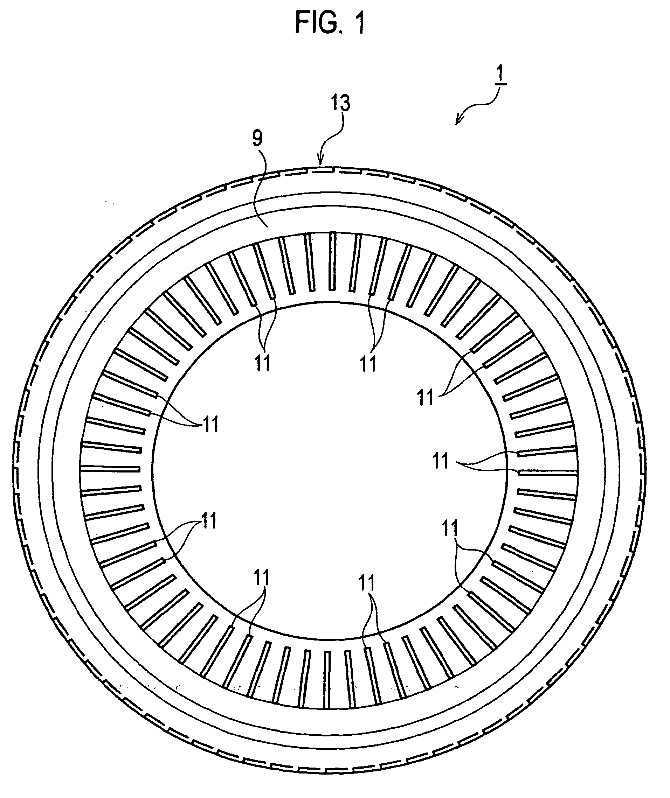

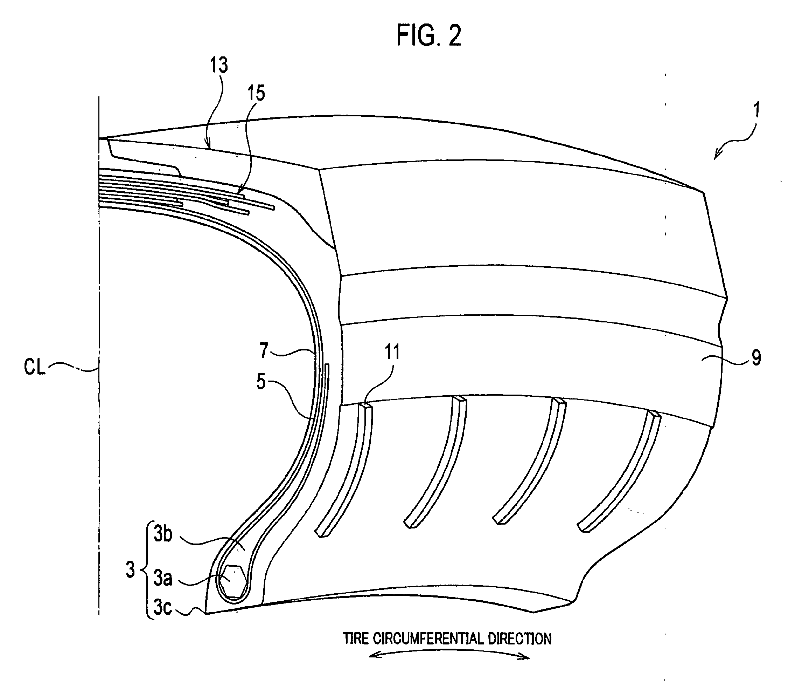

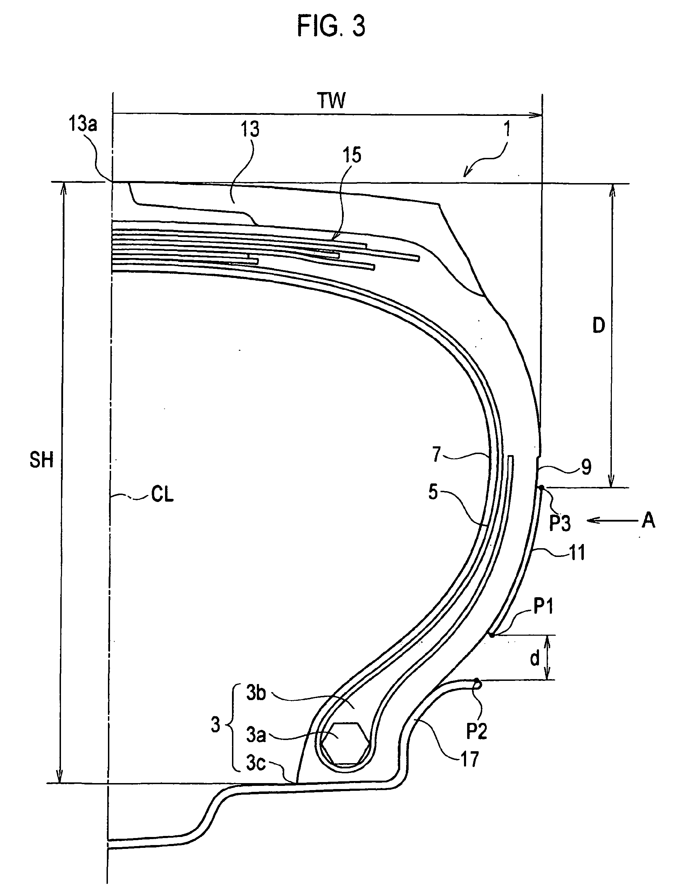

At first, the configuration of the pneumatic tire 1 according to First Embodiment is described with reference to FIGS 1 to 3. FIG. 1 is a side view showing the pneumatic tire 1 according to First Embodiment. FIG. 2 is a partial sectional perspective view showing the pneumatic tire 1 according to First Embodiment. FIG. 3 is a cross-sectional view in tread width direction showing the pneumatic tire 1 according to First Embodiment. Note that the pneumatic tire 1 according to First Embodiment is assumed to be a heavy-duty tire having an outer diameter of not less than 2 m.

As shown in FIGS. 1 to 3, the pneumatic tire 1 includes paired bead portion 3 each having: at least a bead core 3a, a bead filler 3b, and a bead toe 3c; and a carcass layer 5 folded back at the bead core 3a.

On the inner side of the carcass layer 5, an inner liner 7, which is a highly airtight rubber layer equivalent to a tube, is provided. Also, on the outer side in the tread width direction of the carcass layer 5, i.e., a tire surface 9 in a sidewall portion (tire side surface), there is provided a turbulent flow generation projection 11 which projects from the tire surface 9 outward in the tread width direction to generate a turbulent flow.

It is assumed that the tire surface includes the tire outer surface (for example, outer surfaces of a tread portion and a sidewall portion) and the tire inner surface (for example, the inner surface of the inner liner).

A tread portion 13, which is to be in contact with a road surface, is provided on the outside in the tire radial direction of the carcass layer 5. Multiple belt layers 15 which reinforce the tread portion 13 are provided between the carcass layer 5 and the tread portion 13.

(2) Configuration of Turbulent Flow Generation Projection

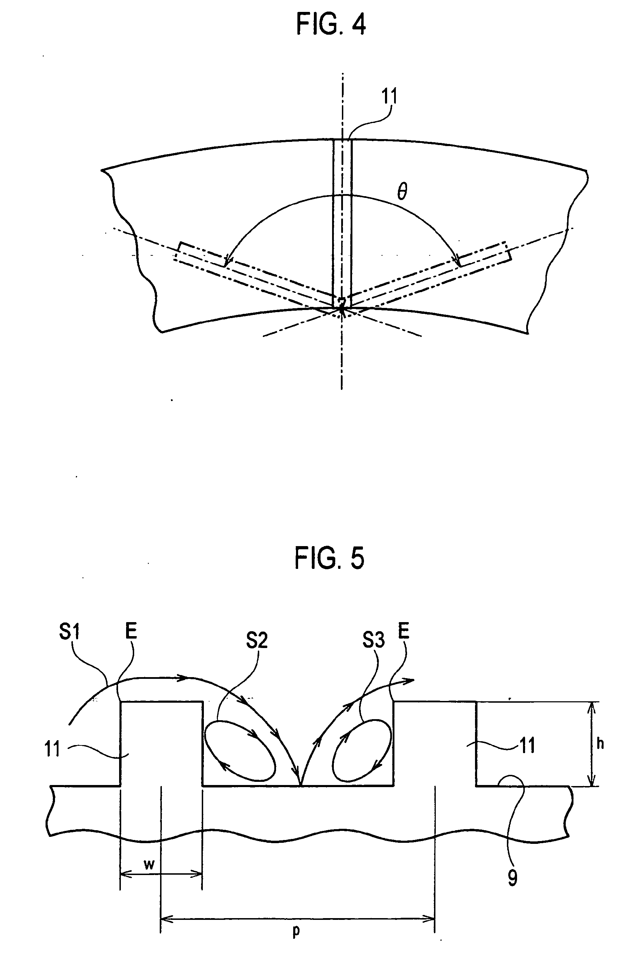

Next, the configuration of turbulent flow generation projection 11 is described with reference to FIGS. 1 to 5. FIG. 4 is a top view showing the turbulent flow generation projection 11 according to First Embodiment. FIG. 5 is a cross-sectional view approximately perpendicular to the extending direction (longitudinal direction) of the turbulent flow generation projection 11 according to First Embodiment.

As shown in FIGS. 1 to 5, the turbulent flow generation projection 11 linearly extends along the tire radial direction. The turbulent flow generation projection 11 is formed with an approximately rectangle shape in a cross section approximately perpendicular to the extending direction of the turbulent flow generation projection 11 (i.e., approximately tire radial direction).

A projection-to-rim distance d from P1 to P2 in the cross section in the tread width direction is preferably set to 30 to 200 mm where P1 is the innermost position of the turbulent flow generation projection 11 in the tire radial direction and P2 is the outermost position of the rim flange 17 in the tire radial direction.

If the projection-to-rim distance d is less than 30 mm, the turbulent flow generation projection 11 may be cut away due to possible contact with the rim flange 17, thus the durability of the turbulent flow generation projection 11 may be reduced. On the other hand, if the projection-to-rim distance d is greater than 200 mm, the distance is not sufficiently small to reduce the temperature in the neighborhood of the bead portion 3 which is originally formed thicker than the tire surface 9 in other sidewall portions, thus the tire temperature may not be efficiently reduced.

The outer lateral end distance D from P3 to an outermost tread position 13a where P3 is the outermost position of the turbulent flow generation projection 11 in the tire radial direction, is not less than 10% of the tire height SH. Particularly, the outer lateral end distance, D is further preferably not more than 20 % of the tire height SH in order to cool large area and reduce the heat conduction to the bead portion 3.

If the outer lateral end distance D is less than 10% of the tire height SH, the turbulent flow generation projection 11 may come into contact with a road surface and be cut away, thus the durability of the turbulent flow generation projection 11 may be reduced.

Specifically, the outermost projection position P3 is preferably located more inward along the tire radial direction than the position with the tire maximum width TW in order to reduce the tire temperature, particularly the temperature in the neighborhood of the bead portion 3.

For the turbulent flow generation projection 11, the relationship $h = \sqrt{\{1/(v/r)\}} \times \text{coefficient } \kappa \ldots (\text{Equation I})$ holds where "h" is the projection height (mm) from the tire surface 9 to the most protruded position of the turbulent flow generation projection 11, "v" is the speed of the vehicle (km/h), "r" is the tire outer diameter (m), and coefficient $\kappa$ = 27.0 to 29.5

If the projection height h is less than the value determined by the above-mentioned equation, the height is not sufficient to accelerate the flow of traveling wind which flows over the turbulent flow generation projection 11, thus the tire temperature may not be efficiently reduced. On the other hand, if the projection height h is greater than the value determined by the above-mentioned equation, the height is not sufficiently small to reduce the temperature within the turbulent flow generation projection 11 (heat storage temperature), and also the strength of the turbulent flow generation projection 11 may be too small, thus the above-mentioned problem may occur.

Now, how the equation I, $h = \sqrt{\{1/(V/R)\}} \times \kappa$ was derived is described. The original function of the turbulent flow generation projection 11 is to generate a turbulent flow by using an upper layer of a velocity boundary layer in the neighborhood of the tire surface 9, or an air layer in a region with a higher velocity above the velocity boundary layer, and to actively perform heat exchange for the tire surface 9. It is known that the thickness of the velocity boundary layer is related to the angular velocity of the tire rotation, specifically lower the angular velocity is, thicker the velocity boundary layer is.

By substituting $Re \propto r^2 \times \omega$ into the relationship that the thickness of the velocity boundary layer, $D \propto$ rotating

body radius $r/\sqrt{(\text{Reynolds number})\text{Re}}$ , $D \propto \sqrt{1/\omega}$ ...(Equation II) can be derived.

A tire having a greater outside diameter for construction vehicles has a lower angular velocity with respect to the vehicle speed. Thus, the thickness of the velocity boundary layer needs to be considered upon setting the projection height h. Table 1 shows results of experiment for obtaining optimal projection height h of a tire for construction vehicle, determined by the vehicle speed V and the tire outer diameter R.

[Table 1]

|  | Tire outer diameter R = 4m | Tire outer diameter R = 2m |
|---|---|---|
| Vehicle speed V = 60 km/h | Tire height = 7.4 mm | Tire height = 5.0 mm |
| Vehicle speed V = 20 km/h | Tire height = 13.0 mm | Tire height = 9.0 mm |

As shown in table 1, according to the experimental result, it was found that if a vehicle runs at 60 km/h with tires having an outer diameter of 4 m, optimal projection height h is around 7.5 mm. It was also found that if a vehicle runs at 60 km/h with tires having an outer diameter of 2 m, optimal projection height h is around 5.0 mm.

It was also found that if a vehicle runs at 20 km/h with tires having an outer diameter of 4 m, optimal projection height h is around 13.0 mm. It was also found that if a vehicle runs at 20 km/h with tires having an outer diameter of 2 m, optimal projection height h is around 9.0 mm.

Thus, the experimental result approximately shows that above-mentioned Equation II, $D \propto \sqrt{1/\omega}$ and $\omega \propto$ V/R holds. Thus, the following relationship holds: $h = \sqrt{\{1/(V/R)\}} \times \kappa$.

From the above Equation I, $h = \sqrt{\{1/(V/R)\}} \times \kappa$, the following equation can be derived:

$\kappa = h \times \sqrt{(V/R)\}}$ ...(Equation III). The values of coefficient $\kappa$ determined by the Equation III are shown in Table 2.

[Table 2]

|  | Tire outer diameter R = 4m | Tire outer diameter R = 2m |
|---|---|---|
| Vehicle speed V = 60 km/h | $\kappa = 29.05$ | $\kappa = 27.39$ |
| Vehicle speed V = 20 km/h | $\kappa = 29.07$ | $\kappa = 28.45$ |

From the experimental result described above, optimal projection height h is determined by the vehicle speed V and the tire outside diameter R. As shown in Table 2, if a vehicle runs at 60 km/h with tires having an outer diameter of 4 m, $\kappa = 7.5 \times \sqrt{(60/4)}$, thus $\kappa = 29.05$. Also if a vehicle runs at 60 km/h with tires having an outer diameter of 2 m, $\kappa = 5.0 \times \sqrt{(60/2)}$, thus $\kappa = 27.39$.

If a vehicle runs at 20 km/h with tires having an outer diameter of 4 m, $\kappa = 13.0 \times \sqrt{(20/4)}$, thus $\kappa = 29.07$. If a vehicle runs at 20 km/h with tires having an outer diameter of 2 m, $\kappa = 9.0 \times \sqrt{(20/2)}$, thus $\kappa = 28.46$.

Based on the above results, the inventors of the present application have derived the above-mentioned Equation I: $h = \sqrt{\{1/(v/r)\}} \times \text{coefficient } \kappa$ where the coefficient $\kappa = 27.0$ to 29.5. For example, for a tire having an outer diameter of 4 m, the projection height h is preferably in a range of $7.5 \text{ mm} \leq h \leq 13 \text{ mm}$ in consideration of actual speed of construction vehicles, which is 20 to 60 km/h, and is preferably set to a height adjusted for the most frequently used speed range for each mine.

The projection width w of a cross section of the turbulent flow generation projection 11, the cross section being approximately perpendicular to the extending direction of the turbulent flow generation projection 11 is constant along the extending direction of the turbulent flow generation projection 11. The projection width w is preferably 2 to 10 mm (see FIG. 5).

If the projection width w is less than 2 mm, the strength of the turbulent flow generation projection 11 may be too small, causing vibration of the turbulent flow generation projection 11 due to rotational wind or traveling wind, thus the durability of the turbulent flow generation projection 11 may be reduced. On the other hand, if the projection width w is greater than 10 mm, the width is not sufficiently small to reduce the temperature within the turbulent flow generation projection 11 (heat storage temperature), thus the tire temperature may not be efficiently reduced.

As shown in FIG. 4, inclined angle θ of the turbulent flow generation projection 11 to the tire radial direction is preferably in a range of -70° ≤ θ ≤ 70°. When pneumatic tire 1 is rotated, air flow on the tire surface 9 in the sidewall portion is directed to the outer radial direction due to the centrifugal force. In order to reduce the portion of stagnant air on the back face side of the turbulent flow generation projection 11 for an inflow of air into the space between the turbulent flow generation projections 11, and to increase heat dissipation, the inclined angle θ of the turbulent flow generation projection 11 is preferably set in the above-mentioned range.

The inclined angle θ of the turbulent flow generation projections 11 may be set differently for each turbulent flow generation projections 11 because speed of air flow is slightly varied depending on a position in the tire radial direction of the pneumatic tire 1 which is a rotating body.

As shown in FIG. 5, it is preferable to satisfy the relationships of 1.0 ≤ p/h ≤ 20.0 and 1.0 ≤ (p-w)/w ≤ 100.0 where "h" is the above-mentioned projection height, "p" is the pitch between adjacent turbulent flow generation projections 11, and "w" is the projection width. Note that "p/h" is measured at the midpoint between the innermost position of the turbulent flow generation projections 11 in the tire radial direction (innermost projection position (P1)) and the outermost position of the turbulent flow generation projections 11 in the tire radial direction (outermost projection position (P2)).

In particular, it is preferable to set the relationship of 2.0 ≤ p/h ≤ 15.0, and is further preferable to set the relationship of 4.0 ≤ p/h ≤ 10.0. In addition, it is preferable to set the relationship of 5.0 ≤ (p-w)/w ≤ 70.0, and is further preferable to set the relationship of 10.0 ≤ (p-w)/w ≤ 30.0. Note that the pitch (p) is the distance between the midpoints of the width of adjacent turbulent flow generation projections 11 in their extending direction.

As described above, if the pitch p is too small, i.e., the pitch P is narrow, the air flow (turbulent flow) specified by p/h does not come into the groove base portion, while if the pitch p is too large, the resulting performance will be equivalent to the one with no shaping of the turbulent flow generation projections 11. Thus, it is preferable that the pitch "p" be set to satisfy the above-mentioned numerical value ranges.

Also, (p-w)/w shows the ratio of the pitch p to the projection width, and too small value of the ratio means that the ratio of the area of the surface whose heat needs to be dissipated to the surface area of the turbulent flow generation projection 11 becomes equivalent. The turbulent flow generation projection 11 is made of rubber, and an improvement of heat dissipation effect due to an increase of the surface area can not be expected, thus the minimum value of (p-w)/w is defined to be 1.0.

(3) Modifications of Turbulent Flow Generation Projection

The above mentioned turbulent flow generation projection 11 according to First Embodiment may be modified as follows. The components same as those of the pneumatic tire 1 according to First Embodiment described above are shown with the same reference numerals as used in First Embodiment, and components different from those of the pneumatic tire 1 according to First Embodiment are mainly described.

(3-1) Modification 1

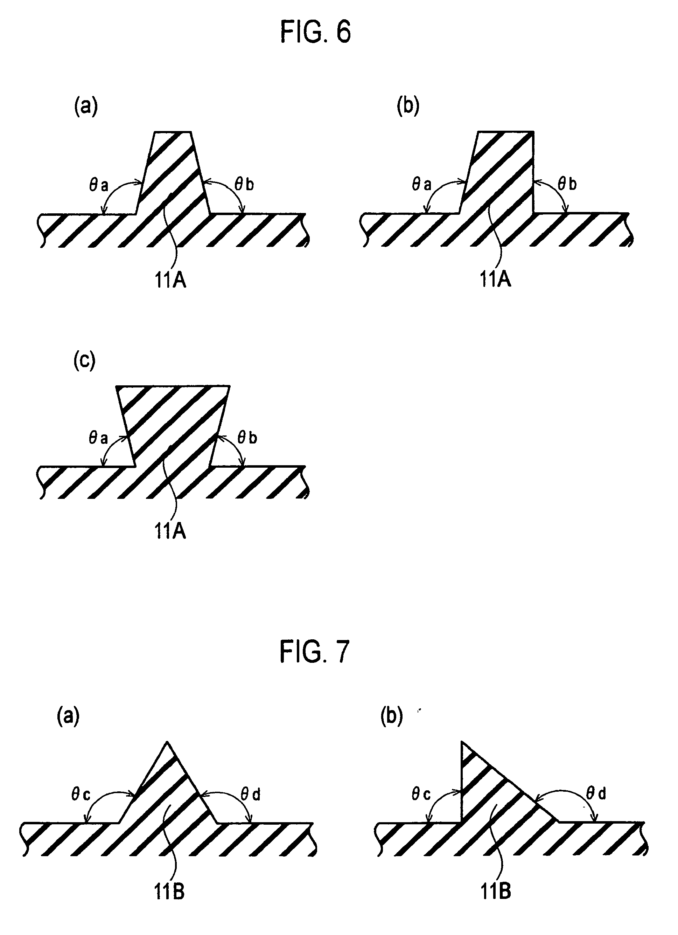

At first, a turbulent flow generation projection 11A according to Modification 1 is described with reference to FIG. 6. FIG. 6 is a cross-sectional view approximately perpendicular to the extending direction of the turbulent flow generation projection 11A according to Modification 1.

As shown in FIGS. 6(a) to 6(c), a turbulent flow generation projection 11A is formed with an approximately trapezoid shape in a cross section approximately perpendicular to the extending direction of the turbulent flow generation projection 11A in order to prevent crack formation due to wear of a portion of the projection.

Note that in the cross section, the inclined angle θa between the tire surface 9 and one lateral side of the turbulent flow generation projection 11A is not required to be same as the inclined angle θb between the tire surface 9 and the other lateral side of the turbulent flow generation projection 11.

(3-2) Modification 2

Next, a turbulent flow generation projection 11B according to Modification 2 is described with reference to FIG. 7. FIG. 7 is a cross-sectional view approximately perpendicular to the extending direction of the turbulent flow generation projection 11B according to Modification 2.

As shown in FIGS. 7(a) and 7(b), the turbulent flow generation projection 11B is formed with an approximately triangle shape in a cross section approximately perpendicular to the extending direction of the turbulent flow generation projection 11B in order to reduce the amount of rubber used while maintaining the dimension of the bottom side and the rigidity of the projection compared with the projection formed with approximately rectangle shape in a cross section of the projection.

Note that in the cross section, the inclined angle $\theta c$ between the tire surface 9 and one lateral side of the turbulent flow generation projection 11B is not required to be same as the inclined angle $\theta d$ between the tire surface 9 and the other lateral side of the turbulent flow generation projection 11B.

(3-3) Modification 3

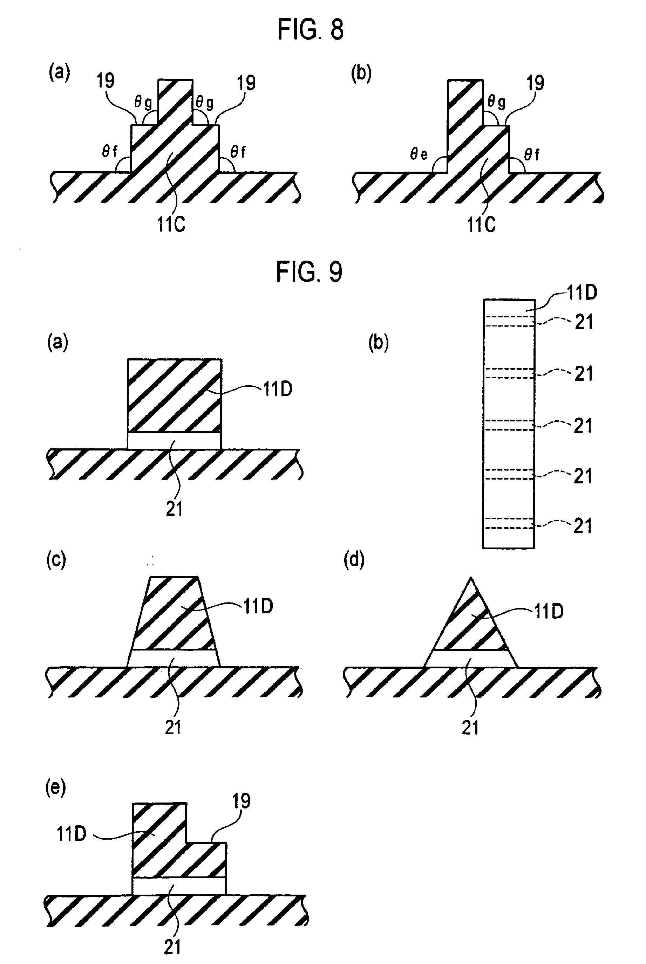

Next, a turbulent flow generation projection 11 C according to Modification 3 is described with reference to FIG. 8. FIG. 8 is a cross-sectional view approximately perpendicular to the extending direction of the turbulent flow generation projection 11C according to Modification 3.

As shown in FIGS. 8(a) and 8(b), the turbulent flow generation projection 11C is formed with a shape having a step 19 in a cross section approximately perpendicular to the extending direction of the turbulent flow generation projection 11C.

In this case, the step 19 may be provided on the both lateral sides of the turbulent flow generation projection 11C as shown in FIG. 8(a), or may be provided on either lateral side of the turbulent flow generation projection 11C as shown in FIG. 8(b).

Note that in the cross section, the inclined angle $\theta c$ between the tire surface 9 and one lateral side of the turbulent flow generation projection 11C, and the inclined angle $\theta d$ between the tire surface 9 and the other lateral side of the turbulent flow generation projection 11C are not required to be the same, and not required to be right angles. It should be noted that an intersecting angle $\theta g$ between one side and the other side of the step 19 is not limited to an approximately right angle, but may be slanted angle.

(3-4) Modification 4

Next, a turbulent flow generation projection 11D according to Modification 4 is described with reference to FIG. 9. FIG. 9 is a cross-sectional view approximately perpendicular to the extending direction of the turbulent flow generation projection 11D according to Modification 4.

As shown in FIGS. 9(a) and 9(b), the turbulent flow generation projection 11D is formed with an approximately rectangle shape in a cross section approximately perpendicular to the extending direction of the turbulent flow generation projection 11D. Through holes 21 penetrating the turbulent flow generation projection 11D in an approximately perpendicular direction to the extending direction of the turbulent flow generation projection 11D (i.e., approximately the tire circumferential direction) are formed in the turbulent flow generation projection 11D in order to increase the heat dissipation rate of the turbulent flow generation projection 11D itself.

Note that the turbulent flow generation projection 11D with the through holes 21 penetrating therethrough does not necessarily need to have an approximately rectangle shape in a cross section approximately perpendicular to the extending direction, but may have, for example, an approximately trapezoid shape in a cross section as shown in FIG. 9(c), an approximately triangle shape in a cross section as shown in FIG. 9(d), or a shape having the step 19 in a cross section as shown in FIG. 9(e).

(4) Comparative Evaluation

Next, in order to further clarify the effects of the present invention, following results of the test performed using the pneumatic tire according to a conventional example and the embodiment are described. The present invention is not limited to these examples by any means.

The configuration of the pneumatic tire according to the conventional example and the embodiment and temperature rise tests for the bead portion thereof are described. The temperature rise tests for the bead portion were performed under the conditions of the tire size of 53/80R63, a normal internal pressure, and a normal load (conditions for tire for construction vehicle).

[Table 3]

| | | Conventional example | Embodiment |
|---|---|---|---|
| Projection width w | Width of lower side | - | 8 mm |
| | Width of upper side | - | 4 mm |
| Projection height (h) | | - | 10 mm |
| Projection-to-rim distance (d) | | - | 150 mm |
| Extension range of projection | Outer lateral end distance (D) | - | 55 % of SH |
| Temperature rise tests for bead portion | | 0 °C for control (reference) | Δ 4.5 °C for control (reference) |

*SH…tire height

As shown in Table 3, the pneumatic tire according to the conventional example is not provided with a turbulent flow generation projection. The pneumatic tire 1 according to the present embodiment is provided with the turbulent flow generation projection 11.

<Temperature Rise Tests for Bead Portion>

Each pneumatic tire installed on a normal rim was mounted on the front wheel of a 360-ton dump truck under the above-mentioned conditions. After the dump truck was driven for 24 hours at 15 km/h, a temperature rise was measured at the location approximately 20 mm above the rim flange and approximately 5 mm outer side in the tread width direction of the carcass layer. Note that each temperature shown is the average of measured values at six positions equally spaced along the tire circumferential direction.

As a result, it was demonstrated that the pneumatic tire 1 according to the present embodiment had a smaller temperature rise of the bead portion (4.5 degrees less) compared with the pneumatic tire according to the conventional example, thus the temperature in the neighborhood of the bead portion can be reduced. It was demonstrated that, because of turbulent flow generation projection 11 provided to the pneumatic tire 1 according to the present embodiment, the tire temperature, particularly in the neighborhood of the bead portion can be reduced.

<Durability Test>

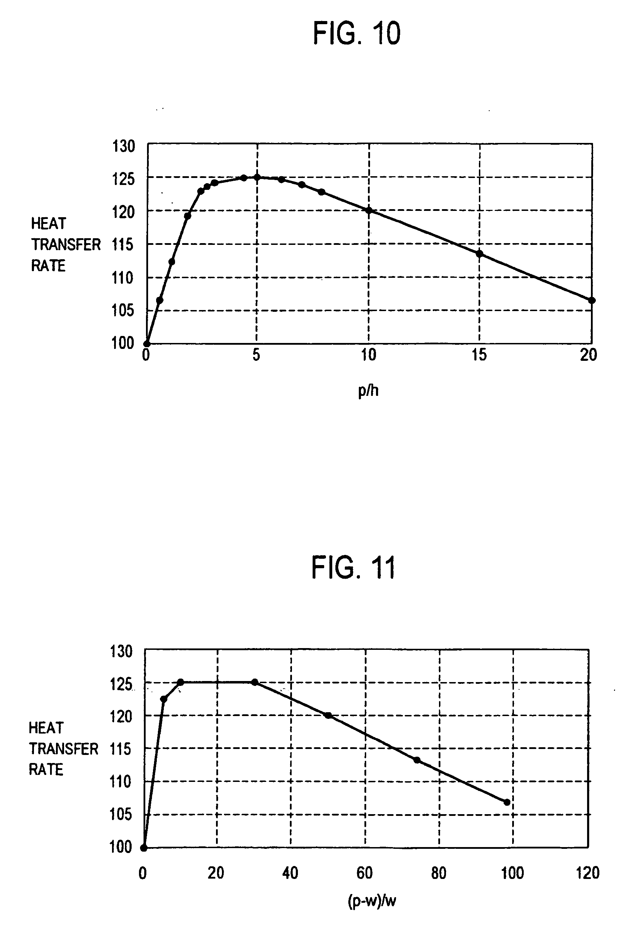

Next, the durability test results obtained by using varied p/h, (p-w)/w, and inclined angle for the turbulent flow generation projection are shown in FIGS. 10 to 12. The ordinate axis of the graphs of FIGS. 10 to 12 indicates the heat transfer rate determined by measuring the temperature on the tire surface and the wind speed with a blower blowing the air with a certain amount of heat generated by applying a constant voltage to a heater onto the tire. The higher the heat transfer rate is, the greater the cooling effect is, providing an excellent durability. In the durability test, the heat transfer rate of the pneumatic tire provided with no turbulent flow generation projection (conventional tire) is assumed to be "100."

The heat transfer rate measurement test was performed under the following conditions (conditions for tire for construction vehicle).

Tire size: 53/80R63
Wheel size: 36.00/5.0
Internal pressure condition: 600 kPa
Load condition: 83.6 t
Speed condition: 20 km/h

As shown in FIG. 10, in the relationship between the value of ratio (p/h) of the pitch (p) to the height (h) of the turbulent flow generation projection 11 and durability performance, by setting p/h in the range of not less than 1.0 and not more than 20.0, the heat transfer rate is increased. By setting p/h in the range of 2.0 to 15.0, better heat transfer rate and higher durability is achieved. Thus, p/h should be set in the range of $1.0 \leq p/h \leq 20.0$. Particularly, it is preferable to set p/h in the range of $2.0 \leq p/h \leq 15.0$, and further preferable to set p/h in the range of $4.0 \leq p/h \leq 10.0$.

As shown in FIG. 11, in the relationship between (p-w)/w and the heat transfer rate (measured by a similar method), by setting (p-w)/w in the range of $1.0 \leq (p-w)/w \leq 100.0.$, the heat transfer rate is increased. Particularly, it is preferable to set (p-w)/w in the range of $5.0 \leq (p-w)/w \leq 70.0$, and further preferable to set (p-w)/w in the range of $10.0 \leq (p-w)/w \leq 30.0$.

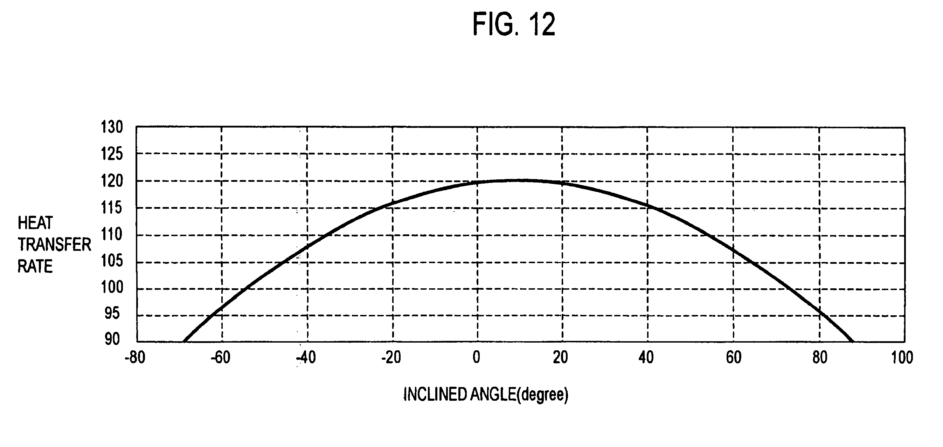

As shown in FIG. 12, the inclined angle θ of the turbulent flow generation projection to the tire radial direction is preferably in the range of from 0 to 70° or from 0 to -70°.

(5) Operations and Effects

With the pneumatic tire 1 according to the present embodiment described above, the projection height

$$h \quad (mm) \quad = \quad \sqrt{\{1/(\text{vehicle speed (k/m)/tire outer diameter (m))}\}} \times 29.$$ 

According to the embodiment, the traveling wind generated from the front of the vehicle as the vehicle travels and the rotational wind generated from the forward in the tire rotation direction as the pneumatic tire 1 is rotated have an increased pressure on the front side of the turbulent flow generation projection 11 when flowing over the turbulent flow generation projection 11. As the pressure is increased, the flows of the traveling wind and the rotational wind that flow over the turbulent flow generation projection 11 can be accelerated (i.e., the heat dissipation rate of the tire temperature can be increased). By the accelerated rotational wind and traveling wind, the tire temperature, particularly the temperature in the neighborhood of the bead portion can be reduced, thus the durability of the tire can be increased.

Specifically, as shown in FIG. 5, the traveling wind and the rotational wind (hereinafter referred to as a main flow S1) are separated from the tire surface 9 by the turbulent flow generation projection 11 to flow over the edge portion E of the front side of the turbulent flow generation projection 11, and then is accelerated to the back face side (rear side) of the turbulent flow generation projection 11.

Then the accelerated main flow S1 flows onto the tire surface 9 in the vertical direction on the back face side of the turbulent flow generation projection 11 (so-called downward flow). At this point, a fluid S2 flowing within stagnant portion (region) of the main flow S1 absorbs the stagnant heat on the back face side of the turbulent flow generation projection 11, and flows again into the main flow S1, which flows over the edge portion E of the next turbulent flow generation projection 11 and is accelerated.

Further, in the front side (front face side) of the next turbulent flow generation projection 11 with respect to the tire rotation direction, a fluid S3 flowing within stagnant portion (region) of the main flow S1 absorbs the stagnant heat on the front face side of the turbulent flow generation projection 11, and flows into the main flow S1 again.

Thus, by the main flow S1 flowing over the edge portion E to be accelerated, and by the fluids S2 and S3 absorbing the stagnant heat and flowing into the main flow S1 again, the tire temperature can be reduced over a wide range. The tire temperature can be reduced, particularly, at root portions of the turbulent flow generation projection 11 and the regions where the main flow S 1 contacts in the vertical direction.

By making the inclined angle θ of the turbulent flow generation projection 11 satisfy the range of $-70° \leq θ \leq 70°$, the tire temperature can be reduced by using not only the traveling wind, but also the rotational wind, which is generated as the pneumatic tire 1 is rotated, thus the tire temperature can be further reduced.

In particular, since a construction vehicle (for example, a dump truck, a grader, a tractor, and a trailer) is not provided with a tire cover which covers each tire (such as fender), even if the speed of the vehicle is low (for example, 10 to 50 km/h), the rotational wind and the traveling wind which flow over the turbulent flow generation projection 11 can be accelerated by applying the above-mentioned the turbulent flow generation projection 11 to the heavy-duty tire mounted on such construction vehicles, thus the tire temperature can be reduced.

(6) Other Embodiments

As described above, the contents of the present invention have been disclosed through First Embodiment of the present invention; however, it should be understood that the discussion and the drawings which form a part of the disclosure does not limit the present invention.

Specifically, when the upper surface of the turbulent flow generation projection 11, which is approximately parallel to the tire surface 9, and the tire surface 9 are flat surfaces, these opposite surfaces does not necessarily need to be parallel. For example, the opposite surfaces may be inclined (upward, downward) to the tire rotation direction (vehicle traveling direction), or may be asymmetrical.

Though the turbulent flow generation projection 11 has been described as the one that linearly extends along the tire radial direction, the invention is not limited to this case, and the turbulent flow generation projection 11 may extend, for example, in a curve along the tire radial direction.

Though the pneumatic tire 1 has been described as the one that is provided with the turbulent flow generation projection 11 which satisfies the relationship of the projection height

$$h \text{ (mm)} = \sqrt{\{1/(\text{vehicle speed (k/m)/tire outer diameter (m))}\}} \times 29,$$ the invention is not limited to this case. For example, the invention may include a method of manufacturing a tire using the above-mentioned equation, for example, in such a way that the turbulent flow generation projection 11 having the projection height h (mm) calculated by the above-mentioned equation is molded on the pneumatic tire 1.

Though the pneumatic tire T1 was described as a heavy-duty tire, the invention is not limited to this case, and the pneumatic tire T1 may be for general radial tire or bias tire for passenger vehicles.

From the disclosure, various alternative embodiments, examples, and operational techniques will become apparent to those skilled in the art. The technical scope of the present invention is only defined by the specification of the invention according to the reasonable claims by the above description.

[Second Embodiment]

In the following, a pneumatic tire 100 according to Second Embodiment is described with reference to the drawings. Specifically, the following are described: (1) the configuration of the turbulent flow generation projection, (2) modifications of depression, (3) comparative evaluation, (4) operations and effects, and (5) other embodiments. The components same as those of the pneumatic tire 1 according to First Embodiment described above are shown with the same reference numerals as used in First Embodiment, and components different from those of the pneumatic tire 1 according to First Embodiment are mainly described.

(1) Configuration of the Turbulent Flow Generation Projection

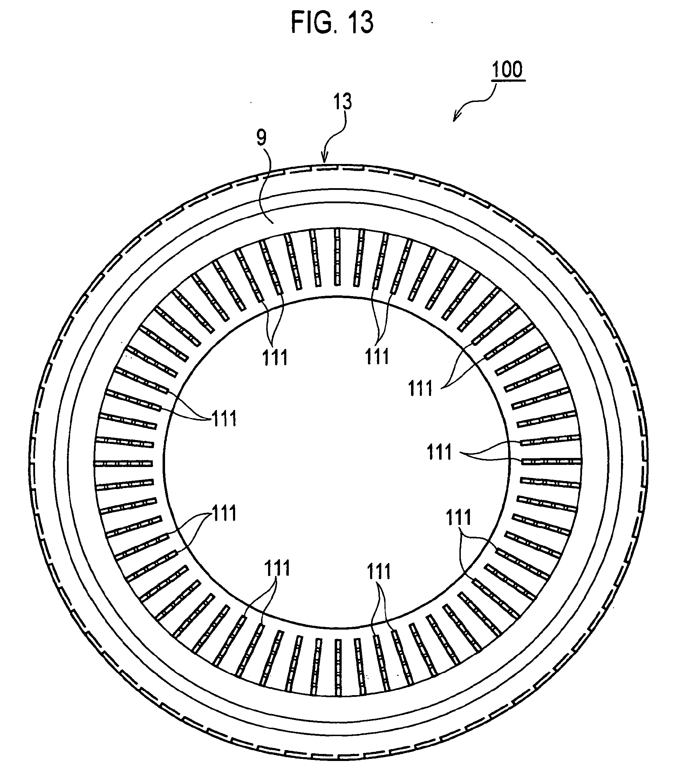

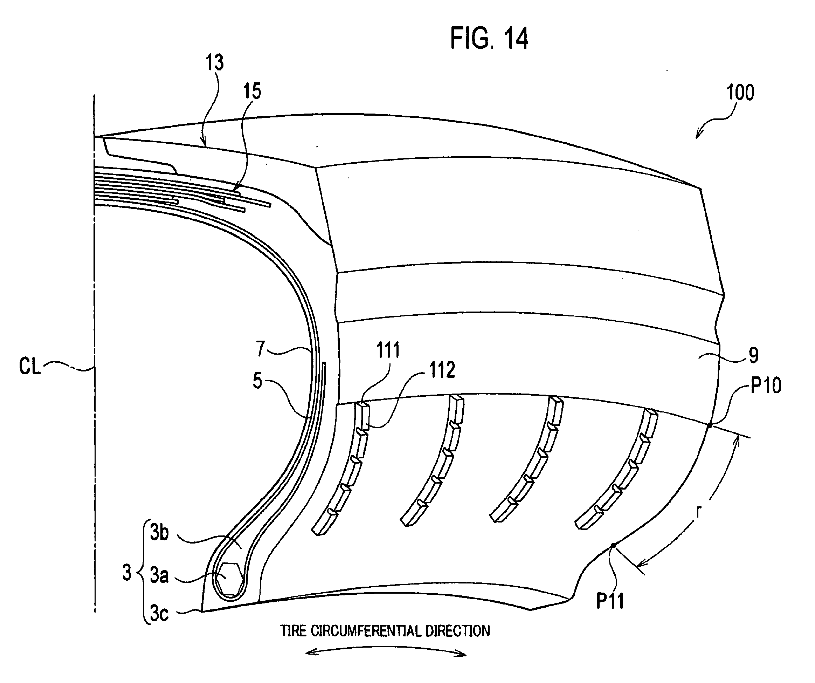

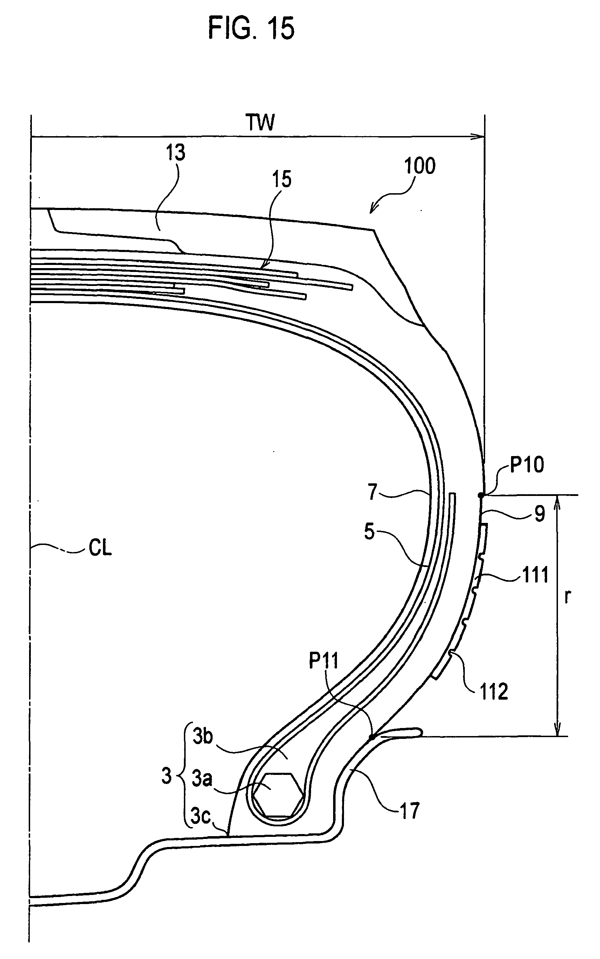

First, the configuration of the turbulent flow generation projection 111 according to Second Embodiment is described with reference to FIGS. 13 to 18. FIG. 13 is a side view showing the pneumatic tire 100 according to Second Embodiment. FIG. 14 is a partial sectional perspective view showing the pneumatic tire 100 according to Second Embodiment. FIG. 15 is a cross-sectional view in the tread width direction showing the pneumatic tire 100 according to Second Embodiment.

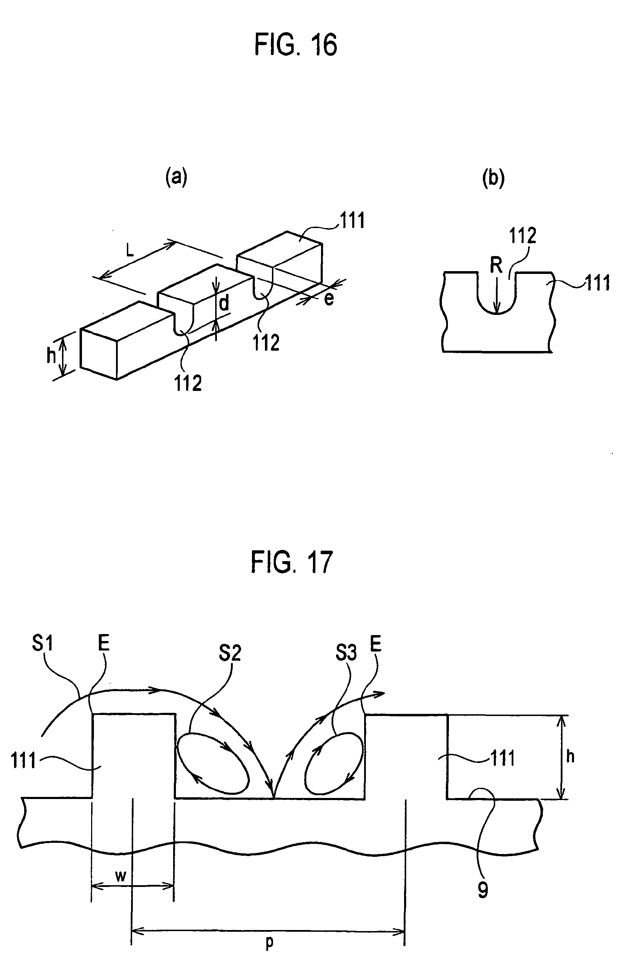

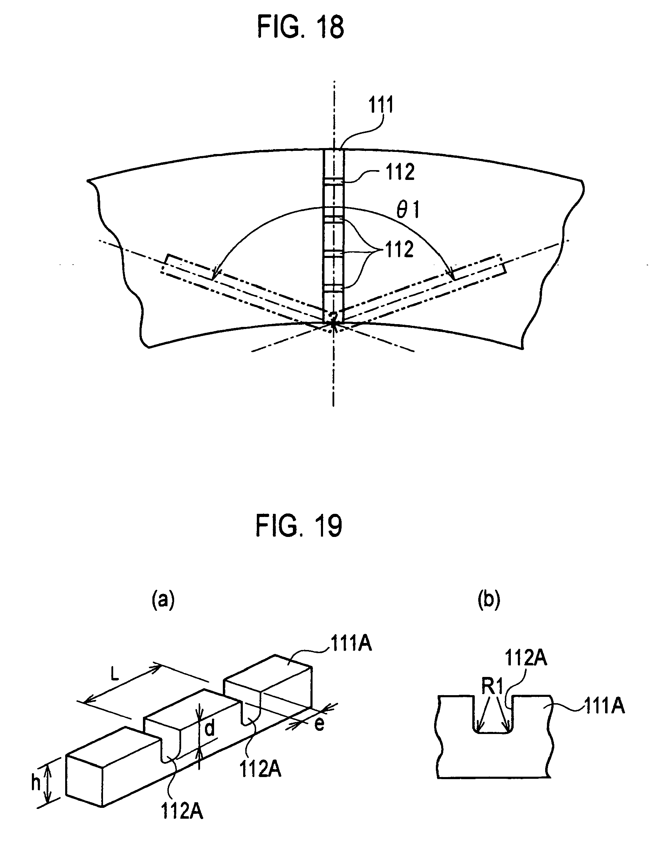

FIG. 16(a) is a perspective view showing the turbulent flow generation projection 111 according to Second Embodiment. FIG. 16(b) is a cross-sectional view approximately perpendicular to the extending direction of the turbulent flow generation projection 111 according to Second Embodiment. FIG. 17 is a radial side view showing the turbulent flow generation projection 111 according to Second Embodiment. FIG. 18 is a top view showing the turbulent flow generation projection 111 according to Second Embodiment.

As shown in FIGS. 13 to 15, the turbulent flow generation projection 111 is provided in a range from a maximum tire width position P10 to an outside bead position P11 where P10 is the position on the tire surface 9 with maximum tire width TW, and P11 is the position on the outside of the bead portion 3 in the tire radial direction, the bead portion 3 being in contact with the rim flange 17.

Specifically, the turbulent flow generation projection 111 is formed with an approximately rectangle shape in a cross section approximately perpendicular to the extending direction (i.e., longitudinal direction) of the turbulent flow generation projection 111. Also, the turbulent flow generation projection 111 has multiple depressions 112 which are recessed toward the tire surface 9 (the bottom of the projection). The depressions 112 are all formed with the same depth.

The side portions of the depression 112 are formed approximately perpendicular to the extending direction of the turbulent flow generation projection 111, toward the tire surface 9. The bottom portion of the depression 112 is formed so that its cross section has rounded corners, i.e., arcs R in order to prevent cracking at the bottom portion due to concentrated stress from opening/closing (expansion/contraction deformation) of the depression 112.

It is preferable to satisfy the relationship of $0.90 \geq d/h \geq 0.30$ where "h" is the projection height from the tire surface 9 to the most protruded position of the turbulent flow generation projection 111, and "d" is the depth of the depression 112 as shown in FIG. 16.

If the ratio (d/h) of the depth (d) of the depression 112 to the projection height (h) is less than 0.30, the range of the degree of opening/closing (expansion/contraction deformation) of the depression 112 due to load may be small, thus the effect of the turbulent flow generation projection 111 suppressing the distortion thereof may be reduced. On the other hand, if the ratio (d/h) of the depth (d) of the depression 112 to the projection height (h) is greater than 0.90, the effect of the turbulent flow generation projection 111 generating a turbulent flow may be reduced.

It is preferable to satisfy the relationship of $0.10 \leq e/L \leq 0.30$ where "L" is the distance between adjacent depressions 112, and "e" is the width of the depression 112 in the extending direction of the turbulent flow generation projection 111. The distance (L) between adjacent depressions 112 is defined by the distance between the midpoints of the widths (e) of the adjacent depressions 112.

If the value of the ratio (e/L) of the width (e) of the depression 112 to the distance (L) between adjacent depressions 112 is greater than 0.30, lower projection heights (h) are provided across a wide range, thus the ratio is not sufficiently small to reduce the temperature within the turbulent flow generation projection 111 (heat storage temperature), and the tire temperature may not be reduced efficiently. On the other hand, if the value of the ratio (e/L) of the width (e) of the depression 112 to the distance (L) between adjacent depressions 112 is smaller than 0.10, the width (e) of the depression 112 is too narrow to provide space for the depression 112 to be closed, thus the effect of suppressing the distortion of the turbulent flow generation projection 111 may be reduced.

A projection height (h) from the tire surface 9 to the most protruded position of the turbulent flow generation projection 11 is more preferably set to 3 to 20 mm. In particular, the projection height (h) is preferably set to 7.5 to 15 mm.

If the projection height (h) is smaller than 3 mm, the projection height is not sufficient to accelerate the flow of the rotational wind or traveling wind which flows over the turbulent flow generation projection 111, thus the tire temperature may not be efficiently reduced. On the other hand, if the projection height (h) is greater than 20 mm, the height is not sufficiently small to reduce the temperature within the turbulent flow generation projection 111 (heat storage temperature), and also the strength of the turbulent flow generation projection 111 may be too small, thereby causing vibration of the turbulent flow generation projection 111 due to the rotational wind or traveling wind, thus the durability of the turbulent flow generation projection 111 itself may be reduced.

As shown in FIG. 17, it is preferable to satisfy the relationships of $1.0 \leq p/h \leq 20.0$ and $1.0 \leq (p-w)/w \leq 100.0$ where "h" is the above-mentioned projection height, "p" is the pitch between adjacent turbulent flow generation projections 11, and "w" is the above-mentioned projection width.

As shown in FIG. 18, inclined angle ($\theta_1$) of the turbulent flow generation projection 111 to the tire radial direction is preferably in the range of $-70° \leq \theta_1 \leq 70°$ ($\pm 70°$).

Also, for the turbulent flow generation projection 111, it is preferable to satisfy the relationship of $1.0 \leq h/w \leq 10$ where "h" is the above-mentioned projection height, and "w" is the above-mentioned projection width.

If the value of the ratio (h/w) of the projection height (h) to the projection width (w) is less than 1.0, the value is not sufficient to accelerate the rotational wind or traveling wind which flows over the turbulent flow generation projection 11, thus the tire temperature, particularly the temperature in the neighborhood of the bead portion 3 may not be efficiently reduced. On the other hand, if the value of the ratio (h/w) of the projection height (h) to the projection width (w) is greater than 10, the value is not sufficiently small to reduce the temperature within the turbulent flow generation projection 11 (heat storage temperature), thus the tire temperature may not be efficiently reduced.

(2) Modification of Depression

The depression 112 according to Second Embodiment described above may be modified as follows. The components same as those of the depression 112 according to Second Embodiment described above are shown with the same reference numerals as used in Second Embodiment, and components different from those of the depression 112 according to Second Embodiment are mainly described.

(2-1) Modification 1

The bottom portion of the depression 112 according to Second Embodiment mentioned above has been described as the one that has the arc R, but may be modified as follows. FIG. 19(a) is a perspective view showing a turbulent flow generation projection 111A according to Modification 1. FIG. 19(b) is a cross-sectional view approximately perpendicular to the extending direction of the turbulent flow generation projection 111A according to Modification 1.

As shown in FIG. 19, a joint portion (comer) between a side portion and the bottom portion of the depression 112 of the turbulent flow generation projection 111A is rounded with a radius of curvature of not less than 1 mm in order to prevent cracking at the bottom portion due to concentrated stress from opening/closing (expansion/contraction deformation) of the depression 112. The bottom portion of the depression 112 forms a plane which connects one arc R1 to the other arc R1.

(2-2) Modification 2

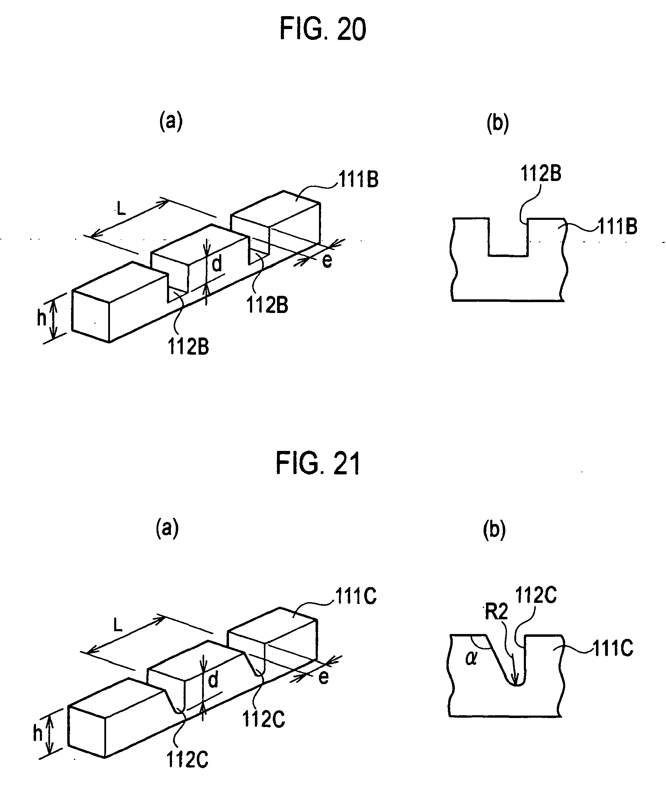

The bottom portion of the depression 112 according to Second Embodiment mentioned above has been described as the one that has the arc R, but may be modified as follows. FIG. 20(a) is perspective view showing a turbulent flow generation projection 111B according to Modification 2. FIG. 20(b) is a cross-sectional view approximately perpendicular to the extending direction of the turbulent flow generation projection 111B according to Modification 2.

As shown in FIG. 20, the bottom portion of a depression 112B of the turbulent flow generation projection 111B is formed of a planar face. Each side portion and the bottom portion are connected to each other with an approximately perpendicular intersection.

(2-3) Modification 3

Each side portion of the depression 112 according to Second Embodiment mentioned above has been described as the one that is formed approximately perpendicular to the extending direction of the turbulent flow generation projection 111, but may be modified as follows. FIG. 21(a) is a perspective view showing a turbulent flow generation projection 111C according to Modification 3. FIG. 21(b) is a cross-sectional view approximately perpendicular to the extending direction of the turbulent flow generation projection 111C according to Modification 3.

As shown in FIG. 21, one of the side portions of the depression 112 in the turbulent flow generation projection 111C is formed approximately perpendicular to the extending direction of the turbulent flow generation projection 111C, toward the tire surface 9. On the other hand, the other side portion of the depression 112 is formed being inclined a predetermined angle α (e.g., 120°) to the extending direction of the turbulent flow generation projection 111C. Of course, the inclined angle of one side portion of the depression 112 may be same as that of the other side portion thereof.

The bottom portion of the depression 11A is provided with an arc R2 in order to prevent cracking at the bottom portion due to concentrated stress from opening/closing (expansion/contraction deformation) of the depression 112.

(2-4) Modification 4

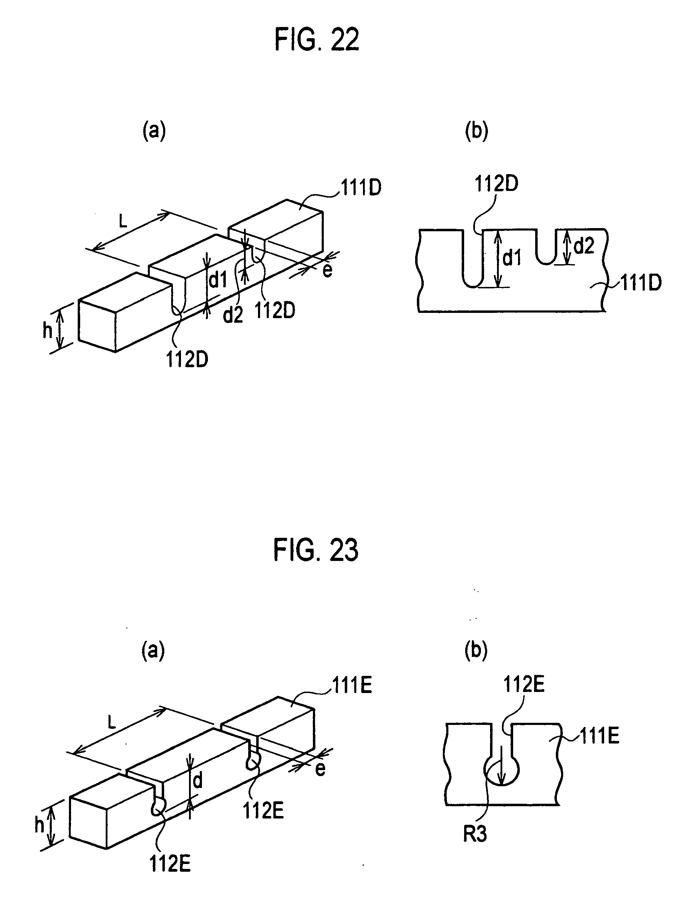

The depressions 112 according to Second Embodiment mentioned above have been described as those formed with the same depth, but may be modified as follows. FIG. 22(a) is a perspective view showing a turbulent flow generation projection 111D according to Modification 4. FIG. 22(b) is a cross-sectional view approximately perpendicular to the extending direction of the turbulent flow generation projection 111D according to Modification 4.

As shown in FIG. 22, adjacent depressions 112D in the turbulent flow generation projection 111D are formed with different depths (a depth d1 and a depth d2 in FIG. 22). Of course, all the adjacent depressions 112D are not required to have different depths, and at least one of multiple depressions 112D may have a different depth from the others.

(2-5) Modification 5

The bottom portion of the depression 112 according to Second Embodiment mentioned above has been described as the one that has the arc R, but may be modified as follows. FIG. 23(a) is a perspective view showing a turbulent flow generation projection 111E according to Modification 5. FIG. 23(b) is a cross-sectional view approximately perpendicular to the extending direction of the turbulent flow generation projection 111E according to Modification 5.

As shown in FIG. 23, each side portion of the depression 112E in the turbulent flow generation projection 111E is formed approximately perpendicular to the extending direction of the turbulent flow generation projection 111E. The bottom portion of the depression 112E is provided with an arc R3 to have a semicircular shape in order to prevent cracking at the bottom portion due to concentrated stress from opening/closing (expansion/contraction deformation) of the depression 112.

(3) Comparative Evaluation

Next, in order to further clarify the effect of the present invention, following results of test performed using the pneumatic tire according to a conventional example, a comparative example, and the present embodiment are described. The present invention is not limited at all by these examples.

The configuration, breakage (appearance) condition, and temperature rise test for bead portion of the pneumatic tire according to the conventional example, comparative example, and the present embodiment are described with reference to FIG. 4. The temperature rise tests for the bead portion were performed under the conditions of the tire size of 53/80R63, a normal internal pressure, and a normal load (conditions for tire for construction vehicle).

[Table 4]

|  |  | Conventional example | Comparative example | Embodiment |
|---|---|---|---|---|
| Turbulent flow generation projection | Projection height (h) | - | 10 | 10 |
|  | Projection width (w) | - | 4 | 4 |
| Depression | Distance (L) between adjacent depressions | - | - | 30 |
|  | Width (e) of depression | - | - | 6 |
|  | Arc (R) | - | - | 3 |
| Breakage (Appearance) condition | After driven for 24 hours | No cracking | No cracking | No cracking |
|  | After driven for one month | No cracking | Cracking observed in a portion of the edge | No cracking |
| Temperature rise tests for bead portion |  | 30°C to 80°C (50°C rise) | 30°C to 77°C (47°C rise) | 30°C to 75°C (45°C rise) |

As shown in Table 4, the pneumatic tire according to the conventional example was not provided with a turbulent flow generation projection. The pneumatic tire according to the comparative example was provided with turbulent flow generation projections in which depressions were not formed. The pneumatic tire according to the present embodiment was provided with turbulent flow generation projections in which depressions were formed.

<Breakage (Appearance) Condition>

Each pneumatic tire mounted on a normal rim was mounted on the front wheel of a 320-ton dump truck under the above-mentioned conditions. After the dump truck was driven for 24 hours at 15 km/h, the tire was observed to determine whether breakage occurred or not (a first test). Under the above-mentioned condition, after the dump truck was driven for one month at 15 km/h, the tire was observed to determine whether breakage occurred or not (a second test).

As a result, for the pneumatic tires according to the conventional example, the comparative example, and the present embodiment, no cracking was observed in the first and second tests; however, for the pneumatic tires according to the comparative example, cracking was observed in a portion of the edge of some turbulent flow generation projections in the second test.

That is, with the pneumatic tire 100 (the present embodiment) having the turbulent flow generation projection 111 with the depression 112 formed, breakage such as cracking can be suppressed compared with the pneumatic tire (the comparative example) having the turbulent flow generation projection with no depression formed. Thus, the durability of the tire can be improved by increasing the durability of the sidewall portions, particularly the turbulent flow generation projections.

<Temperature Rise Test for Bead Portion>

Each pneumatic tire mounted on a normal rim was mounted on the front wheel of a 320-ton dump truck under the above-mentioned conditions. After the dump truck was driven for 24 hours at 15 km/h, a temperature rise was measured at the location approximately 20 mm above the rim flange and approximately 5 mm outer side in the tread width direction of the carcass layer. Note that each temperature rise shown is the average of measured values at three positions equally spaced along the tire circumferential direction.

As a result, it was demonstrated that the pneumatic tire according to the comparative example and the present embodiment had a smaller temperature rise of the bead portion compared with the pneumatic tire according to the conventional example, thus the temperature in the neighborhood of the bead portion can be reduced. That is, it was demonstrated that, with the pneumatic tire having the turbulent flow generation projection (the comparative example and the present embodiment), the tire temperature, particularly in the neighborhood of the bead portion can be reduced compared with the pneumatic tire having no turbulent flow generation projection (the conventional example).

<Overall Evaluation>

As described above, with the pneumatic tire 100 according to the present embodiment, the tire temperature can be reduced as well as breakage such as cracking on the tire surface can be suppressed compared with the pneumatic tires according to the conventional example and the comparative example. Thus, the durability of the tire can be improved by increasing the durability of the sidewall portions, particularly the turbulent flow generation projections.

Though the tire for construction vehicles was used for the above-mentioned breakage (appearance) condition check and the temperature rise test for the bead portion, the pneumatic tire according to the present embodiment may be applied to tires for passenger vehicles, trucks, buses, and airplanes with similar performance.

(4) Operations and Effects

For the pneumatic tire 1 according to Second Embodiment described above, the turbulent flow generation projection 11 is provided in a range from the maximum tire width position P1 to the outside bead position P2. According to this configuration, the rotational wind generated from the forward in the tire rotation direction along with the rotation of the pneumatic tire 1 as well as the traveling wind generated from the front of the vehicle along with the traveling of the vehicle can be accelerated. Thus, the heat dissipation rate of the tire temperature can be increased. That is, by the accelerated rotational wind and traveling wind, the tire temperature, particularly the temperature in the neighborhood of the bead portion 3 can be reduced, thus the durability of the tire can be increased.

Since the outer circumference of conventional pneumatic tire is often formed of rubber material having a low thermal conductivity, unbalanced temperature distribution tends to occur inside the tire causing a relatively high temperature inside the tire, thereby creating a problem in that the tire heat cannot be efficiently dissipated across the tire in a uniform manner.

Particularly, because heavy-duty tires are often used for vehicles driving over a bad road or with heavy load, deformation of the sidewall portion is large. Accordingly, if conventional technology is applied to the heavy-duty tires by providing groove-like portions for heat dissipation on the sidewall portion, cracking tends to occur at joint section between the tire surface and the groove-like portions, thereby the durability of the sidewall portion is reduced.

In view of the above, according to Second Embodiment, since the turbulent flow generation projection 11 is provided with multiple depressions 11A, the turbulent flow generation projections are deformable due to opening/closing (expansion/contraction deformation) of the depression 112 caused by the deformation of sidewall portions, thereby breakage such as cracking on the tire surface 9 can be suppressed. Thus, the durability of the tire can be improved by increasing the durability of the sidewall portions, particularly the turbulent flow generation projections 11.

(5) Other Embodiments

As described above, the contents of the present invention have been disclosed through the embodiments of the present invention; however, it should be understood that the discussion and the drawings which form a part of the disclosure do not limit the present invention.

Specifically, when the upper surface of the turbulent flow generation projection 111, which is approximately parallel to the tire surface 9, and the tire surface 9 (bottom surface) are planar, these opposite surfaces do not necessarily need to be parallel. For example, the opposite surfaces may be inclined (upward, downward) to the tire rotation direction (the vehicle traveling direction), or may be asymmetrical.

From the present disclosure, various alternative embodiments, examples, and operational techniques will become apparent to those skilled in the art. The technical scope of the present invention is only defined by the specification of the invention according to the reasonable claims by the above description.

[Third Embodiment]

In the following, a pneumatic tire 200 according to Third Embodiment is described with reference to the drawings. Specifically, the following are described: (1) the configuration of the turbulent flow generation projection, (2) modifications of the turbulent flow generation projection, (3) comparative evaluation, (4) operations and effects, and (5) other embodiments. The components same as those of the pneumatic tire 1 according to First Embodiment described above are shown with the same reference numerals as used in First Embodiment, and components different from those of the pneumatic tire 1 according to First Embodiment are mainly described.

(1) Configuration of the Turbulent Flow Generation Projection

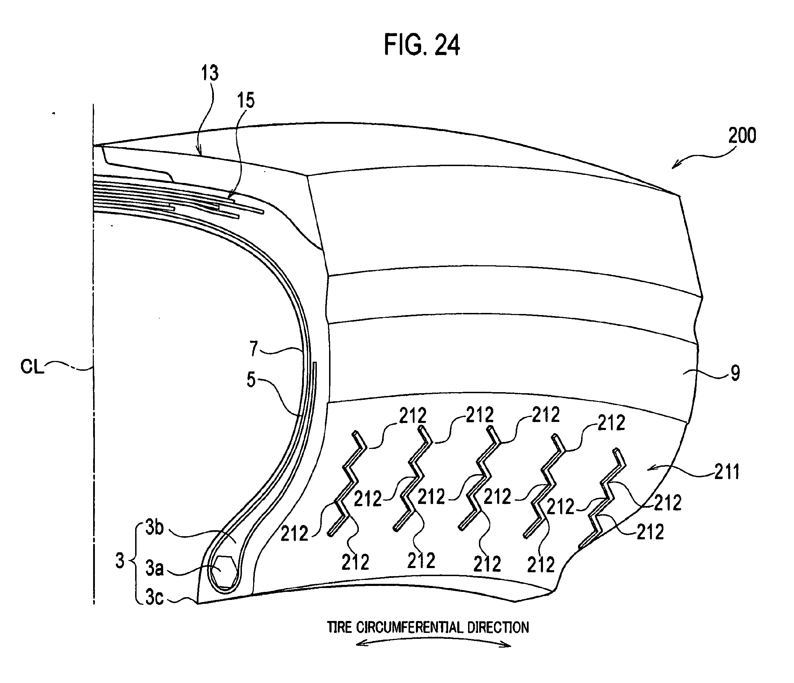

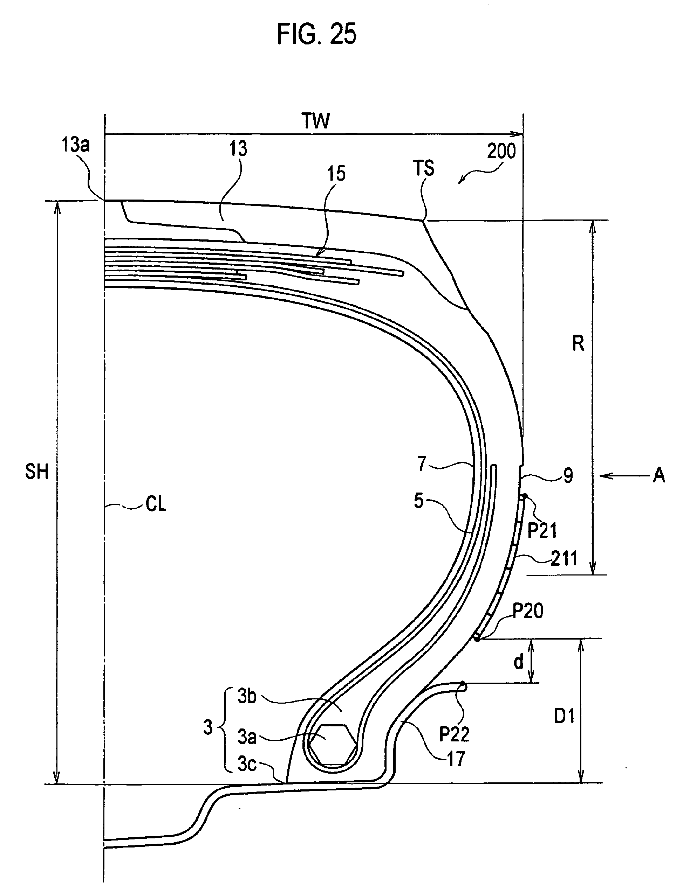

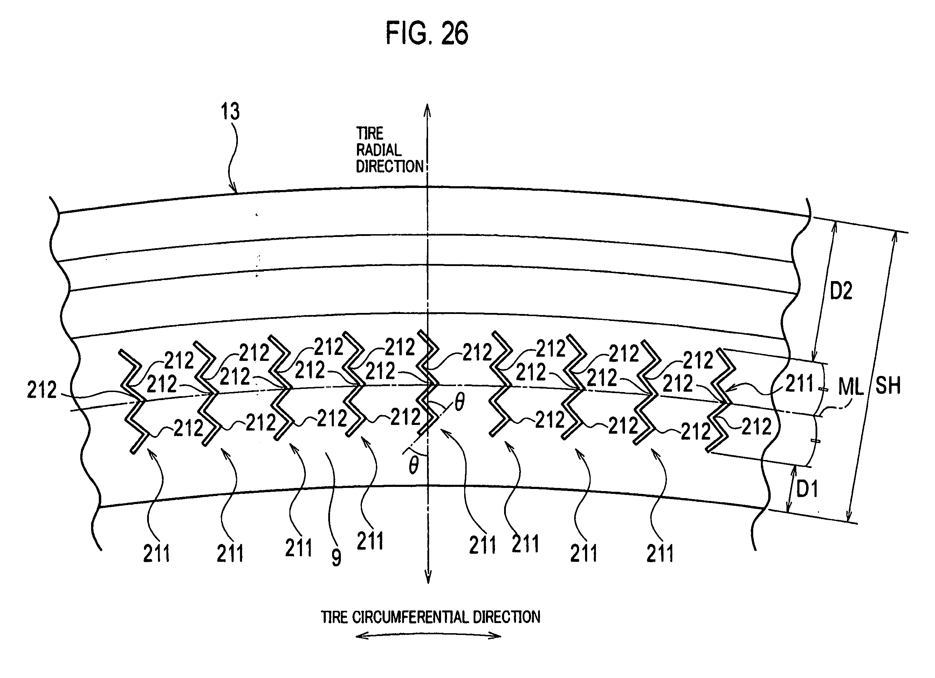

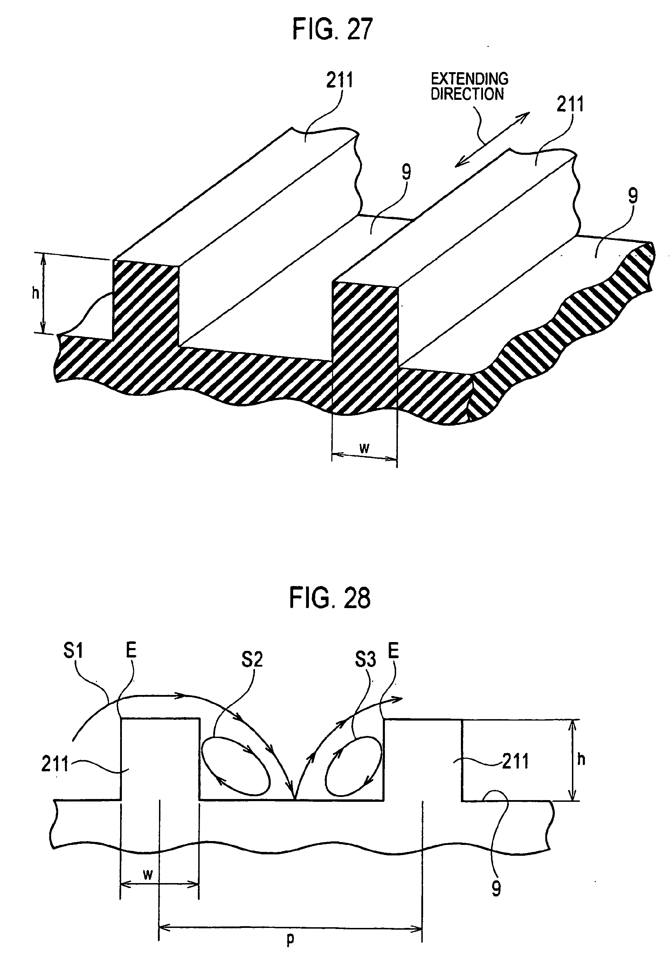

First, the configuration of a turbulent flow generation projection 211 according to Third Embodiment is described with reference to FIGS. 24 to 28. FIG. 24 is a partial sectional perspective view showing the pneumatic tire 200 according to Third Embodiment. FIG. 25 is a cross-sectional view in the tread width direction showing the pneumatic tire 200 according to Third Embodiment. FIG. 26 is a partial side view (along the arrow A in FIG. 25) showing the pneumatic tire 200 according to Third Embodiment. FIG. 27 is a perspective view showing the turbulent flow generation projection 211 according to Third Embodiment. FIG. 28 is a cross-sectional view showing the turbulent flow generation projection 211 according to Third Embodiment.

As shown in FIGS. 24 to 28, the turbulent flow generation projection 211 has multiple bent portions 212 at which the turbulent flow generation projection 211 is bent to be inflected linearly while extending along the tire radial direction. That is, on the lateral side of the turbulent flow generation projection 211 in the extending direction (longitudinal direction), multiple bent portions 212 are formed by multiple sub-lateral sides. The turbulent flow generation projection 211 is alternately oppositely inclined to the tire radial direction by the multiple bent portions 212.

An inside end distance (D1) from the bead toe 3c to a innermost position (P20) of the turbulent flow generation projection 211 in the tire radial direction is not less than 10% of the tire height (SH) which is from the bead toe 3c to outermost tread position 13a. The inside end distance (D1) is preferably not more than 35% of the tire height (SH) so that the turbulent flow generation projection 211 is arranged at the bead portion 3 and does not reach the maximum tire width (TW).

If the inside end distance (D1) is less than 10% of the tire height (SH), the turbulent flow generation projection 211 may be cut away due to possible contact with the rim flange 17, and the durability of the turbulent flow generation projection 211 may be reduced.

An outermost position (P21) of the turbulent flow generation projection 211 in the tire radial direction is located inner side of the tread shoulder end TS (so-called hump portion) in the tire radial direction. The outermost position (P21) is preferably located outer side of a position in the tire radial direction where the position on the tire surface has a height of 57% of the tire height (SH) from the outermost tread position 13a. That is, the outermost position (P21) is preferably located between a range (R) from the tread shoulder end TS to the position which has a height of 43% of the tire height (SH) from the bead toe 3c.

Note that if the outermost position (P21) is located outer side of the tread shoulder end TS in the tire radial direction, the turbulent flow generation projection 211 may be cut away due to possible contact with a road surface, and the durability of the turbulent flow generation projection 211 may be reduced.

Specifically, the outermost position (P2) is preferably located inner side of the maximum tire width (TW) in the tire radial direction in order to reduce the tire temperature, particularly in the neighborhood of the bead portion; however, if the temperature in the neighborhood of the tread shoulder end TS is desired to be reduced, the outermost-position (P2) may be located near the tread shoulder end TS.

The projection width (w) of a cross section of the turbulent flow generation projection 211, the cross section being approximately perpendicular to the extending direction of the turbulent flow generation projection 211, is constant along the extending direction of the turbulent flow generation projection 211. Specifically, as shown in FIGS. 27 and 28, the turbulent flow generation projection 211 preferably satisfies the relationship of $1.0 \leq h/w \leq 10$ where "h" is the projection height from the tire surface 9 to the most protruded position of the turbulent flow generation projection 211, and "w" is the projection width.

If the value of the ratio (h/w) of the projection height (h) to the projection width (w) is less than 1.0, the value is not sufficient to accelerate the traveling wind which flows over the turbulent flow generation projection 211, thus the tire temperature, particularly the temperature in the neighborhood of the bead portion 3 may not be efficiently reduced. On the other hand, if the value of the ratio (h/w) of the projection height (h) to the projection width (w) is greater than 10, the value is not sufficiently small to reduce the temperature within the turbulent flow generation projection 211 (heat storage temperature), thus the tire temperature may not be efficiently reduced.

As described in Second Embodiment, the projection height (h) is preferably from 3 to 20 mm, and particularly is further preferably from 7.5 to 15 mm.

As shown in FIGS. 27 and 28 and described in First Embodiment and 2, it is preferable to satisfy the relationships of $1.0 \leq p/h \leq 20.0$ and $1.0 \leq (p-w)/w \leq 100.0$ where "h" is the above-mentioned projection height, "p" is the pitch between adjacent turbulent flow generation projections 211, and "w" is the projection width. Note that "p/h" is measured at the midpoint between the innermost position of the turbulent flow generation projections 211 in the tire radial direction (innermost projection position (P20)) and the outermost position of the turbulent flow generation projections 211 in the tire radial direction (outermost projection position (P21)). That is, as shown in FIG. 26, "p/h" is measured on the middle line (ML) of the turbulent flow generation projections 211.

As shown in FIGS. 26 and described in First Embodiment and 2, inclined angle (θ) of the turbulent flow generation projection 211 to the tire radial direction is preferably in the range of -70° ≤ θ ≤ 70° (±70°).

Alternatively, the turbulent flow generation projections 211 may be divided along its extending direction to form discontinuous segments, or may be arranged non-uniformly along the tire circumferential direction. For an inflow of air to the turbulent flow generation projections 211 on the sidewall portion, stagnant air is created on the back side (i.e., rear side) of the projections with respect to the tire rotation direction, thus creating an area where heat dissipation effect is reduced compared with the case that the turbulent flow generation projections 211 is not provided. In order to improve the average heat transfer rate by eliminating such area where heat dissipation effect is reduced, it is effective to have the turbulent flow generation projections 211 divided into discontinuous segments along the extending direction of the turbulent flow generation projections 211.

(2) Modifications of Turbulent Flow Generation Projection

The turbulent flow generation projection 211 according to the modifications described above may be modified as follows. The components same as those of the turbulent flow generation projection 211 according to Third Embodiment described above are shown with the same reference numerals as used in Third Embodiment, and components different from those of the turbulent flow generation projection 211 according to Third Embodiment are mainly described.

(2-1) Modification 1

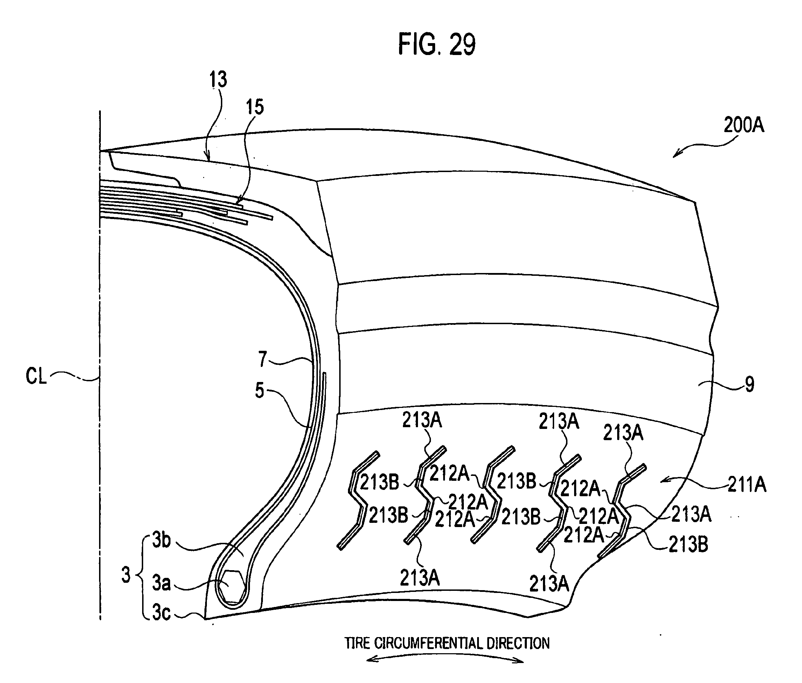

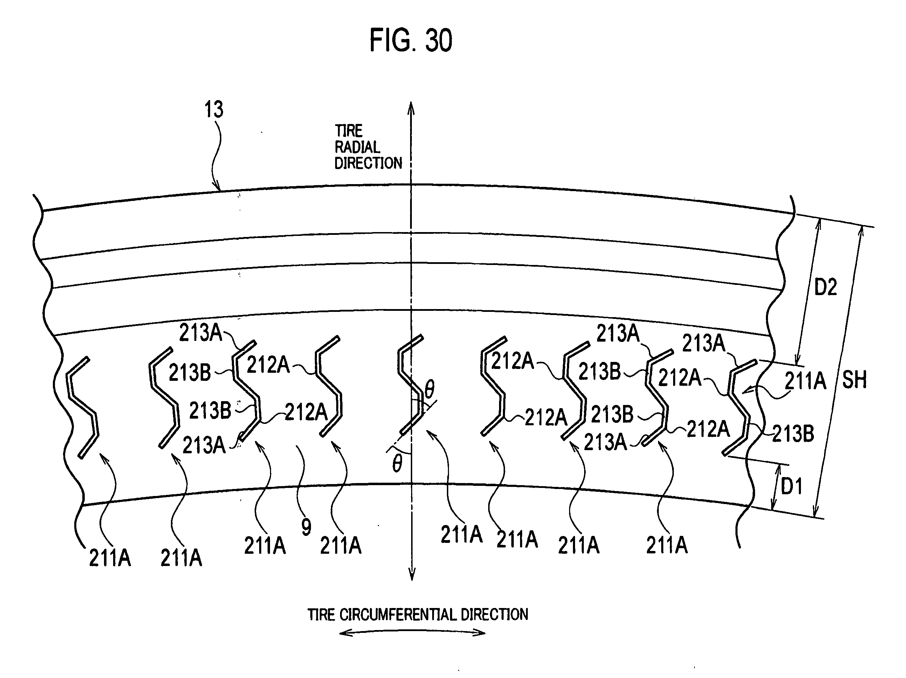

The turbulent flow generation projection 211 according to Third Embodiment mentioned above has been described as the one that is inclined with respect to the tire radial direction alternately to the opposite sides by the multiple bent portions 212, but may be modified as follows. FIG. 29 is a partial sectional perspective view showing a pneumatic tire 200A according to Modification 1. FIG. 30 is a partial side view showing the pneumatic tire 200A according to Modification 1.

As shown in FIGS. 29 and 30, the turbulent flow generation projection 211A in the pneumatic tire 200A includes an inclined portion 213A and a parallel portion 213B where the inclined portion 213A is inclined with respect to the tire radial direction by multiple bent portions 212A, and the parallel portion 213B is approximately parallel to the tire radial direction. The inclined portion 213A and the turbulent flow generation projection 211A are provided at equal intervals.

(2-2) Modification 2

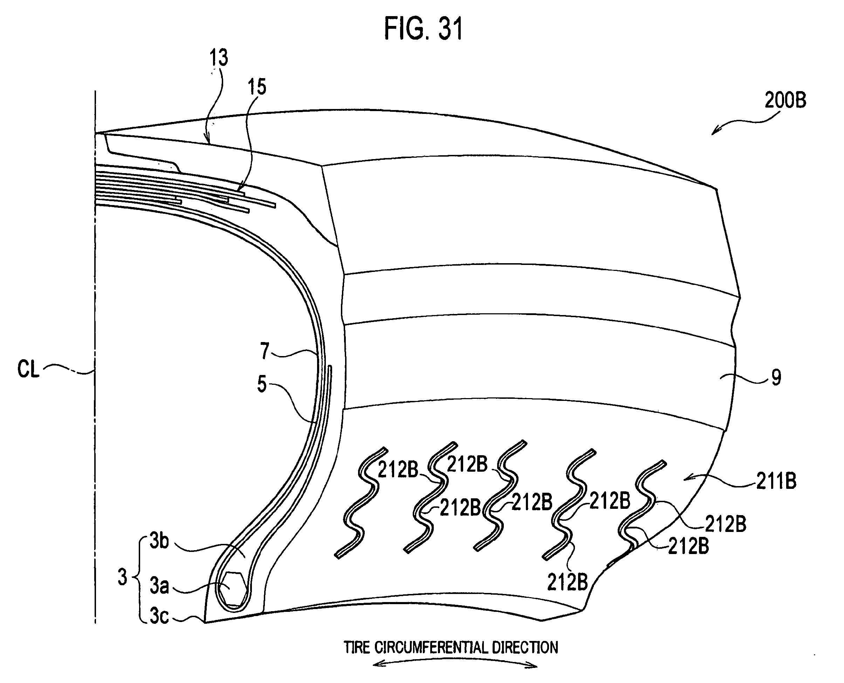

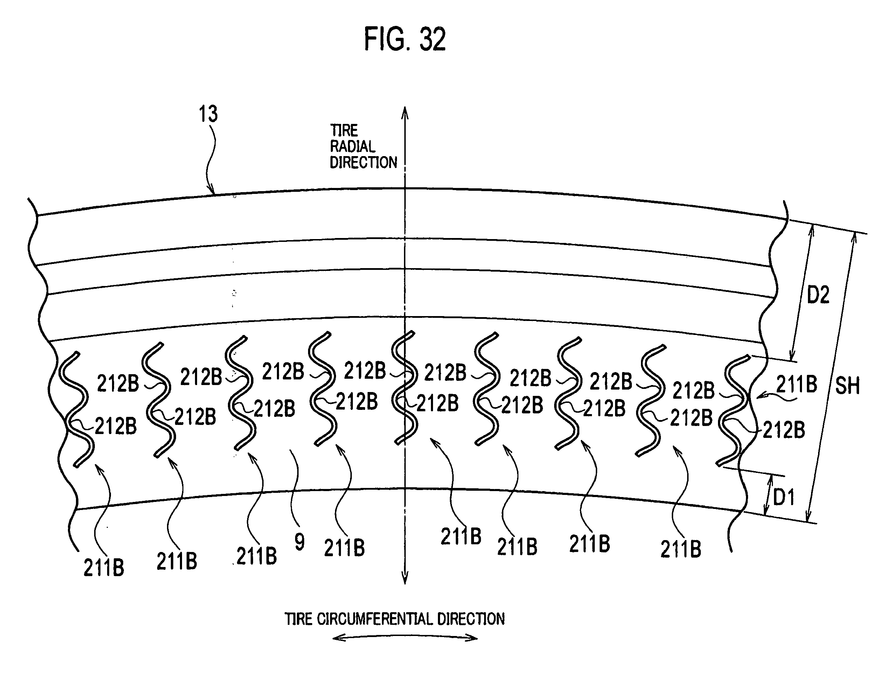

The turbulent flow generation projection 211 according to Third Embodiment mentioned above has been described as the one that has multiple bent portions 212 at which the turbulent flow generation projection 211 is bent so as to be inflected linearly while extending along the tire radial direction, but may be modified as follows. FIG. 31 is a partial sectional perspective view showing a pneumatic tire 200B according to Modification 2. FIG. 32 is a partial side view showing the pneumatic tire 200B according to Modification 2.

As shown in FIGS. 31 and 32, the turbulent flow generation projection 211B in the pneumatic tire 200B has, at equal intervals, multiple bent portions 212B at which the turbulent flow generation projection 211B is curved to be in a curved shape while extending along the tire radial direction. Note that the turbulent flow generation projection 211B is inclined with respect to the tire radial direction alternately to the opposite sides by the multiple bent portions 212B.

(3) Comparative evaluation

Next, in order to further clarify the effects of the present invention, the following results of tests performed using the pneumatic tire according to the conventional example and the embodiment are described. The present invention is not limited to these examples by any means.

The configuration and temperature rise tests for the bead portion of the pneumatic tire according to the conventional example and the embodiment are described with reference to Table 1. The temperature rise tests for the bead portion were performed under the conditions of the tire size of 53/80R63, a normal internal pressure, and a normal load (conditions for tire for construction vehicle).

[Table 5]

|  | Conventional example | Embodiment |
|---|---|---|
| Projection shape | - | linear |
| Inclined angle | - | 45° |
| Number of bent portions | - | 3 |
| Projection-to-rim distance (d) | - | 250 mm |
| Temperature rise test for bead portion | 30°C to 80°C (50°C rise) | 30°C to 74°C (44°C rise) |

As shown in Table 5, the conventional pneumatic tire is not provided with a turbulent flow generation projection. The pneumatic tire 200 according to the present embodiment is provided with the turbulent flow generation projection 211.

<Temperature Rise Test for Bead Portion>

The pneumatic tire installed on a normal rim was mounted on the front wheel of a 360-ton dump truck under the above-mentioned conditions. After the dump truck was driven for 24 hours at 15 km/h, a temperature rise was measured at the outside bead position (P20) which is a position on the outside of a bead portion in a tire radial direction, the bead position being in contact point with the rim flange. Note that each temperature rise at the outside bead position (P20) shown is the average of measured values at six positions equally spaced along the tire circumferential direction.
As a result, it was demonstrated that the pneumatic tire 200 according to the embodiment had a smaller temperature rise of the bead portion compared with the pneumatic tire according to Conventional Example, thus the temperature in the neighborhood of the bead portion can be reduced. It was demonstrated that, because of the turbulent flow generation projection provided to the pneumatic tire 200 according to the embodiment, the tire temperature, particularly in the neighborhood of the bead portion can be reduced.

(4) Operations and Effects

The turbulent flow generation projection 211 in the pneumatic tire 200 according to Third Embodiment described above has the bent portions 212 and the width (w) along the extending direction of the turbulent flow generation projection 211 is constant. According to Third Embodiment, the traveling wind generated from the front of the vehicle as the vehicle travels and the rotational wind generated from the forward in the tire rotation direction as the pneumatic tire 1 is rotated have an increased pressure on the front side of the turbulent flow generation projection 211 when flowing over the turbulent flow generation projection 211. As the pressure is increased, the flows of the traveling wind and the rotational wind that flow over the turbulent flow generation projection 211 can be accelerated (i.e., the heat dissipation rate of the tire temperature can be increased). By the accelerated rotational wind and traveling wind, the tire temperature, particularly the temperature in the neighborhood of the bead portion can be reduced, thus the durability of the tire can be increased.
By the turbulent flow generation projection 211 having equally spaced multiple bent portions 212 at which the turbulent flow generation projection 211 is bent to be inflected linearly while extending along the tire radial direction, the turbulent flow generation projection 211 can be easily bent to the tire radial direction due to the bent portions 212 when the lateral side of the pneumatic tire 200 is compressed. Thus, the durability of the turbulent flow generation projection 211 itself can be increased.
Also, by the turbulent flow generation projection 211B having equally spaced multiple bent portions 212B at which the turbulent flow generation projection 211 is curved to be in a curved shape while extending along the tire radial direction, the turbulent flow generation projection 211B can be easily bent to the tire radial direction due to the bent portions 212B when the lateral side of the pneumatic tire 200B is compressed. Thus, the durability of the turbulent flow generation projection 211B itself can be increased.
By making the ratio of the projection height (h) to the projection width (w) satisfy the relationship of $1.0 \leq h/w \leq 10$, the tire temperature, particularly in the neighborhood of the bead portion 3 can be effectively reduced by the rotational wind and the traveling wind which are accelerated after flowing over the turbulent flow generation projection 211.

(5) Other Embodiments

As described above, the contents of the present invention have been disclosed through the embodiments of the present invention; however, it should be understood that the discussion and the drawings which form a part of the disclosure do not limit the present invention.

Specifically, when the upper surface of the turbulent flow generation projection 211, which is approximately parallel to the tire surface 9, and the tire surface 9 (bottom surface) are planar, these opposite surfaces do not necessarily need to be parallel. For example, the opposite surfaces may be inclined (upward, downward) to the tire rotation direction (the vehicle traveling direction), or may be asymmetrical.

From the present disclosure, various alternative embodiments, examples, and operational techniques will become apparent to those skilled in the art. The technical scope of the present invention is only defined by the specification of the invention according to the reasonable claims by the above description.

**Industrial Applicability**

As described above, the pneumatic tire according to the present invention can reduce the tire temperature, particularly in the neighborhood of the bead portion and can increase the durability of the tire, thus the pneumatic tire is useful for tire manufacturing technology.

**Claims**

1. A pneumatic tire (1) which is provided with a turbulent flow generation projection (11) for generating a turbulent flow at least in a portion of a surface of the tire (9) and wherein
   the turbulent flow generation projection extends linearly or curvilinearly along a tire radial direction; and **characterised in that** the tire has an outer diameter of not less than 2 m,
   and a relationship of $h = \sqrt{1/(V/R)} \times$ coefficient $\kappa$ is satisfied where "h" is a projection height (mm) from the surface of the tire to a most protruded position of the turbulent flow generation projection, "V" is a speed of a vehicle (km/h), "R" is a tire outer diameter (m), provided that coefficient $\kappa$=27.0 to 29.5.

2. The pneumatic tire according to claim 1, wherein an inclined angle ($\theta$) which is an angle at which the turbulent flow generation projection is inclined with respect to the tire radial direction satisfies a range of $-70° \leq \theta \leq 70°$.

3. The pneumatic tire according to claim 1, wherein in a cross section in a tread width direction, a projection-to-rim distance (d) from a projection innermost position (P1) to a rim outermost position (P2) is set not less than 30 mm, the projection innermost position being an innermost position of the turbulent flow generation projection in the tire radial direction, the rim outermost position being an outermost position of a rim flange (17) in the tire radial direction

4. The pneumatic tire according to claim 1, wherein an outer lateral end distance (D) from a projection outermost position (P3) to the tread outermost position is not less than 10% of a tire height (SH), the projection outermost position being an outermost position of the turbulent flow generation projection in the tire radial direction.

5. The pneumatic tire according to claim 1, wherein a projection width (w) which is a width of the turbulent flow generation projection in a direction approximately perpendicular to an extending direction of the turbulent flow generation projection is from 2 to 10mm.

6. The pneumatic tire according to claim 1. wherein a relationship of $1.0 \leq h/w \leq 10$ is satisfied, where "h" is the projection height from the surface of the tire to the most protruded position of the turbulent flow generation projection, and "w" is a projection width.

7. The pneumatic tire according to claim 1, wherein relationships of $1.0 \leq p/h.$ $20.0 and 1. $0\leq (p-w)/w \leq 100.0$ are satisfied, where "h" is the projection height from the surface of the tire to the most protruded position of the turbulent flow generation projection, "p" is a pitch between each adjacent two of the turbulent flow generation projections, and "w" is the projection width

**Patentansprüche**

1. Luftreifen (1), der mit einem Turbulenzströmungserzeugungsvorsprung (11) versehen ist, um eine Turbulenzströmung zumindest in einem Teil einer Oberfläche des Reifens (9) zu erzeugen und wobei sich der Turbulenzströmungserzeugungsvorsprung linear oder krummlinig entlang einer radialen Richtung des Reifens erstreckt; und **dadurch gekennzeichnet, dass** der Reifen einen Außendurchmesser von nicht weniger als 2 m aufweist, und

ein Verhältnis von h = √{1/(V/R)} x Koeffizient κ zur Anwendung kommt, wobei "h" eine Vorsprungshöhe (mm) von der Oberfläche des Reifens zur höchsten Vorsprungsposition des Turbulenzströmungserzeugungsvorsprungs ist, "V" eine Geschwindigkeit eines Fahrzeugs (km/h) ist, "R" ein Außendurchmesser (m) des Reifens ist, unter der Maßgabe, dass der Koeffizient κ = 27,0 bis 29,5.

2. Luftreifen nach Anspruch 1, wobei ein Neigungswinkel (θ), bei dem es sich um einen Winkel handelt, in dem der Turbulenzströmungserzeugungsvorsprung in Bezug auf die radiale Richtung des Reifens geneigt ist, einem Bereich von -70° ≤ θ ≤ 70° entspricht.

3. Luftreifen nach Anspruch 1, wobei ein Vorsprung-zu-Felge-Abstand (d) in einem Querschnitt in einer Laufflächen-Breitenrichtung von einer innersten Vorsprungsposition (P1) zu einer äußersten Felgenposition (P2) auf nicht weniger als 30 mm eingestellt ist, wobei die innerste Vorsprungsposition eine innerste Position des Turbulenzströmungserzeugungsvorsprungs in der radialen Richtung des Reifens ist, wobei die äußerste Felgenposition eine äußerste Position eines Felgenrands (17) in der radialen Richtung des Reifens ist.

4. Luftreifen nach Anspruch 1, wobei eine äußere laterale Enddistanz (D) von einer äußersten Vorsprungsposition (P3) zur äußersten Laufflächenposition nicht weniger als 10 % einer Reifenhöhe (SH) beträgt, wobei die äußerste Vorsprungsposition eine äußerste Position des Turbulenzströmungserzeugungsvorsprungs in der radialen Richtung des Reifens ist.

5. Luftreifen nach Anspruch 1, wobei eine Vorsprungsbreite (w), bei der es sich um eine Breite des Turbulenzströmungserzeugungsvorsprungs in einer Richtung ungefähr senkrecht zu einer Verlaufsrichtung des Turbulenzströmungserzeugungsvorsprungs handelt, 2 bis 10 mm beträgt.

6. Luftreifen nach Anspruch 1, wobei ein Verhältnis von 1,0 ≤ h/w ≤ 10 zur Anwendung kommt, wobei "h" die Vorsprungshöhe von der Oberfläche des Reifens zur höchsten Vorsprungsposition des Turbulenzströmungserzeugungsvorsprungs ist, und wobei "w" eine Vorsprungsbreite ist.

7. Luftreifen nach Anspruch 1, wobei Verhältnisse von 1,0 ≤ p/h ≤ 20,0 und 1,0 ≤ (p - w)/w ≤ 100,0 zur Anwendung kommen, wobei "h" die Projektionshöhe von der Oberfläche des Reifens zur höchsten Vorsprungsposition des Turbulenzströmungserzeugungsvorsprungs ist, "p" ein Abstand zwischen jeweils zwei benachbarten der Turbulenzströmungserzeugungsvorsprünge ist, und "w" die Vorsprungsbreite ist.

## Revendications

1. Bandage pneumatique (1), comportant une saillie produisant un écoulement turbulent (11), pour produire un écoulement turbulent, au moins dans une partie d'une surface du bandage pneumatique (9), et dans lequel :

   la saillie à écoulement turbulent s'étend de manière linéaire ou curviligne le long d'une direction radiale du bandage pneumatique ; et **caractérisé en ce que** le bandage pneumatique a un diamètre extérieur non inférieur à 2 m,
   et une relation de h= √{1/(V/R) x coefficient κ étant satisfaite, « h » représentant une hauteur de la saillie (mm), de la surface du bandage pneumatique vers la position à débordement maximal de la saillie produisant un écoulement turbulent, « V » représentant une vitesse d'un véhicule (km/h), « R » représentant un diamètre extérieur du bandage pneumatique (m), à condition que le coefficient κ soit compris entre 27,0 et 29,5.

2. Bandage pneumatique selon la revendication 1, dans lequel un angle incliné (θ), constituant un angle auquel la saillie produisant un écoulement turbulent est inclinée par rapport à la direction radiale du bandage pneumatique, satisfait un intervalle compris entre -70° ≤ θ ≤ 70°.

3. Bandage pneumatique selon la revendication 1, dans lequel, en section transversale dans une direction de la largeur du bandage pneumatique, une distance entre la saillie et la jante (d), de la position interne extrême de la saillie (P1) vers la position externe extrême de la jante (P2), est ajustée à une valeur non inférieure à 30 mm, la position interne extrême de la saillie constituant une position interne extrême de la saillie produisant un écoulement turbulent dans la direction radiale du bandage pneumatique, la position externe extrême de la jante constituant une position externe extrême d'un rebord de la jante (17) dans la direction radiale du bandage pneumatique.

**4.** Bandage pneumatique selon la revendication 1, dans lequel une distance d'extrémité latérale externe (D) entre une position externe extrême de la saillie (P3) et la position externe extrême de la bande de roulement ne représente pas moins de 10% d'une hauteur du bandage pneumatique (SH), la position externe extrême de la saillie constituant une position externe extrême de la saillie produisant un écoulement turbulent dans la direction radiale du bandage pneumatique.

**5.** Bandage pneumatique selon la revendication 1, dans lequel une largeur de la saillie (w), constituant une largeur de la saillie produisant un écoulement turbulent, dans une direction pratiquement perpendiculaire à une direction d'extension de la saillie produisant l'écoulement turbulent, est comprise entre 2 et 10 mm.

**6.** Bandage pneumatique selon la revendication 1, dans lequel une relation de $1{,}0 \leq h/w \leq 10$ est satisfaite, « h » représentant la hauteur de la saillie, de la surface du bandage pneumatique vers la position à débordement maximal de la saillie produisant un écoulement turbulent, « w » représentant une largeur de la saillie.

**7.** Bandage pneumatique selon la revendication 1, dans lequel des relations de $1{,}0 \leq p/h \leq 20{,}0$ et de $1{,}0 \leq (p-w)/w \leq 100{,}0$ sont satisfaites, « h » représentant la hauteur de la saillie, de la surface du bandage pneumatique vers la position à débordement maximal de la saillie produisant l'écoulement turbulent, « p » représentant un pas entre deux saillies adjacentes produisant un écoulement turbulent, et « w » représentant la largeur de la saillie.

# FIG. 1

FIG. 2

# FIG. 3

# FIG. 4

# FIG. 5

# FIG. 6

(a)

(b)

(c)

# FIG. 7

(a)

(b)

# FIG. 8

(a)

(b)

# FIG. 9

(a)

(b)

(c)

(d)

(e)

# FIG. 10

# FIG. 11

# FIG. 12

EP 2 233 322 B1

## FIG. 13

# FIG. 14

EP 2 233 322 B1

# FIG. 15

# FIG. 16

(a)

(b)

# FIG. 17

# FIG. 18

# FIG. 19

(a)

(b)

# FIG. 20

(a)

(b)

# FIG. 21

(a)

(b)

# FIG. 22

(a)

(b)

# FIG. 23

(a)

(b)

# FIG. 24

TIRE CIRCUMFERENTIAL DIRECTION

EP 2 233 322 B1

# FIG. 25

FIG. 26

## FIG. 27

## FIG. 28

FIG. 29

# FIG. 30

EP 2 233 322 B1

FIG. 31

TIRE CIRCUMFERENTIAL DIRECTION

EP 2 233 322 B1

# FIG. 32

EP 2 233 322 B1

**EP 2 233 322 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006076431 A
- WO 2007032405 A
- WO 2006130944 A